(19) Europäisches Patentamt
European Patent Office
Office européen des brevets

(11) EP 3 263 624 B1

(12) **EUROPEAN PATENT SPECIFICATION**

(45) Date of publication and mention of the grant of the patent:
**03.08.2022 Bulletin 2022/31**

(21) Application number: **15883403.6**

(22) Date of filing: **24.12.2015**

(51) International Patent Classification (IPC):
***C09D 11/38*** *(2014.01)* ***C08F 20/38*** *(2006.01)*
***C08F 2/46*** *(2006.01)* ***C09D 11/107*** *(2014.01)*
***C09D 11/037*** *(2014.01)* ***C08G 18/67*** *(2006.01)*
***B41M 5/00*** *(2006.01)* ***C09D 11/023*** *(2014.01)*
***C09D 11/30*** *(2014.01)* ***B41J 2/01*** *(2006.01)*
***C08F 291/14*** *(2006.01)* ***C08G 75/045*** *(2016.01)*
***C09D 11/322*** *(2014.01)* ***C08F 222/10*** *(2006.01)*
***C09D 133/14*** *(2006.01)* ***C09D 135/02*** *(2006.01)*
***C08F 2/26*** *(2006.01)* ***B41M 7/00*** *(2006.01)*

(52) Cooperative Patent Classification (CPC):
**C08F 2/26; C08F 2/46; C08F 20/38; C08F 222/10; C08G 75/045; C09D 11/037; C09D 11/107; C09D 11/322; C09D 11/38; C09D 133/14; C09D 135/02;** B41M 7/0081

(86) International application number:
**PCT/JP2015/086103**

(87) International publication number:
**WO 2016/136113 (01.09.2016 Gazette 2016/35)**

# (54) WATER DISPERSION OF GEL PARTICLES, PRODUCING METHOD THEREOF, AND IMAGE FORMING METHOD

WASSERDISPERSION VON GELTEILCHEN, VERFAHREN ZU DEREN HERSTELLUNG UND BILDHERSTELLUNGSVERFAHREN

DISPERSION DANS L'EAU DE PARTICULES DE GEL, SON PROCEDE DE PRODUCTION ET PROCEDE DE FORMATION D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2015 JP 2015035774**

(43) Date of publication of application:
**03.01.2018 Bulletin 2018/01**

(73) Proprietor: **FUJIFILM Corporation**
**Tokyo 106-8620 (JP)**

(72) Inventors:
- **SATO, Noriaki**
  **Kanagawa 258-8577 (JP)**
- **SUZUKI, Shota**
  **Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 484 127**
**JP-A- H08 259 888**
**JP-A- 2006 206 664**
**JP-A- 2007 113 005**
**JP-A- 2008 519 868**
**JP-A- 2010 024 255**
**US-A1- 2012 225 968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## BACKGROUND OF THE INVENTION

1. Field of the Invention

The present invention relates to a water dispersion of gel particles, a producing method thereof, and an image forming method.

2. Description of the Related Art

Examples of the image forming method of forming an image on a recording medium include an electrophotographic method, a sublimation-type thermal transfer method, a fusion-type thermal transfer method, and an ink jet method.
For example, since the ink jet method can be performed with a cheap device, and the ink can be effectively used, the ink jet method has an advantage in that running cost is not expensive.
Examples of the ink jet method include an image forming method obtained by using ink for ink jet that can be cured by irradiation with active energy rays such as ultraviolet rays.
Hereinafter, ink jet ink that can be cured by irradiation with active energy rays is called "photocurable ink". In addition to ink jet ink, a composition that can be cured by irradiation with active energy rays such as ultraviolet rays is referred to as "photocurable composition".
In the related art, in view of reduction of environmental burden and improvement of workability, an aqueous composition (for example, aqueous ink) including water as a solvent or a dispersion medium is used instead of a solvent-based composition (for example, solvent-based ink) including an organic solvent as a solvent or a dispersion medium.
As an example of an aqueous composition, aqueous photocurable ink is known (for example, see JP2012-149228A).
In JP2012-149228A, an ink jet ink composition including a pigment, a water-soluble organic solvent, a surfactant, specific crosslinking urethane (meth)acrylate, a compound having a radical polymerizable group, a photoradical polymerization initiator, and water is disclosed as an ink jet ink composition in which curing properties by ultraviolet rays irradiation in presence of water or a solvent, jetting stability, and preservation stability are excellent.
Meanwhile, though it is not a polymer used in an aqueous composition, a multi-branched polymer obtained by adding a specific polyvalent mercapto compound to a β position of a (meth)acrylate group of a portion of specific polyfunctional (meth)acrylate compounds is known as a multi-branched polymer with which a coated film in which curing properties and adhesiveness of a cured product are excellent and flexibility to bending and hardness to scratch (that is, scratch resistance) are compatible with each other can be formed (for example, see WO2008/047620A).
In WO2008/047620A, though it is not an aqueous composition, a radiation curable composition (specifically, an ink jet ink composition and a composition for overcoating) including the multi-branched polymer, a photopolymerizable monomer, and a photopolymerization initiator is disclosed.
In US 2012/0225968 A1, an ink composition comprising a pigment, a water-soluble organic solvent, a surfactant, at least one of a urethane (meth)acrylate and a crosslinked urethane (meth)acrylate having a constitutional unit including the urethane (meth)acrylate, a compound having a polymerizable group(s), a photoradical polymerization initiator and water is disclosed.

## SUMMARY OF THE INVENTION

However, the present inventors conducted research to find that there was a tendency in that an image (film) formed by using the ink jet ink composition disclosed in JP2012-149228A lacked flexibility.
Here, the expression "lacking flexibility" means that a film does not follow bending deformation of a recording medium on which the film is formed and the film easily cracks.
That is, in other words, the expression "flexibility of a film" means following properties of a film to bending deformation of a recording medium on which the film is formed.
In WO2008/047620A, an aqueous composition is not disclosed at all.
However, it is considered that there is a tendency in that a film lacks flexibility even if a film is formed on a recording medium with an aqueous composition obtained by causing the multi-branched polymer disclosed in WO2008/047620A to be contained in the aqueous composition.
Meanwhile, compatibility between flexibility described above and hardness (for example, pencil hardness) is required to a film (for example, an image) formed by using an aqueous composition.
Relating to a water dispersion of particles which is a kind of aqueous compositions, redispersibility is required in some cases.

Here, the expression "redispersibility" means properties in which an aqueous liquid (for example, water, aqueous solution, and water dispersion) is supplied to a solidified material formed by evaporating water in a water dispersion, and thus particles in the solidified material are further dispersed in the aqueous liquid. Examples of the solidified material include a solidified material of a water dispersion formed on a coating head or an ink jet head.

Relating to the redispersibility, according to the research of the present inventors, it is determined that there is a tendency in that redispersibility of the ink jet ink composition disclosed in JP2012-149228A is deteriorated.

It is considered that, even if redispersibility of the composition obtained by causing the multi-branched polymer disclosed in WO2008/047620A to be contained in the aqueous composition is checked, redispersibility is also deteriorated.

An embodiment of the present invention is conceived in view of the circumstances described above, and an object thereof is to achieve the following purposes.

That is, a purpose of the embodiment of the present invention is to provide a water dispersion of gel particles that can form a film in which hardness and flexibility are compatible with each other and redispersibility is excellent and a producing method thereof.

Another purpose of the embodiment of the present invention is to provide an image forming method that can form an image in which hardness and flexibility are compatible with each other.

Specific means for solving the purposes is as follows.

<1> A water dispersion of gel particles, in which the gel particles which have a three-dimensional crosslinked structure including a thioether bond and an ethylenic double bond, have a hydrophilic group, and include a photopolymerization initiator are dispersed in water,

wherein the three-dimensional crosslinked structure includes a structure obtained by reacting a polyfunctional vinyl monomer compound and a polyfunctional thiol compound, wherein if the number of ethylenic double bonds included in a total amount of the polyfunctional vinyl monomer compound is set as a C=C number and the number of thiol groups included in a total amount of the polyfunctional thiol compound is set as the number of SH groups, a ratio of the number of SH groups to the C=C number is 0.20 or greater and less than 1.00, and wherein whether the particles in the water dispersion are gel particles is checked by the method indicated in the section "Determination of gelling" of the description.

<2> The water dispersion of gel particles according to <1>, in which the three-dimensional crosslinked structure includes a (meth)acryloyl group as a group including the ethylenic double bond.

<3> The water dispersion of gel particles according to <1> or <2>, in which the three-dimensional crosslinked structure further includes a urethane bond.

<4> The water dispersion of gel particles according to any one of <1> to <3>, in which the hydrophilic group is at least one group selected from the group consisting of a carboxyl group, a salt of a carboxyl group, a sulfo group, a salt of a sulfo group, a sulfuric acid group, a salt of a sulfuric acid group, a phosphonic acid group, a salt of a phosphonic acid group, a phosphoric acid group, a salt of a phosphoric acid group, an ammonium base, and an alkyleneoxy group.

<5> The water dispersion of gel particles according to any one of <1> to <4>, in which solubility of the photopolymerization initiator in water is 1.0 mass% or less at 25°C.

<6> The water dispersion of gel particles according to any one of <1> to <5>, in which the photopolymerization initiator is an acylphosphine oxide compound.

<7> The water dispersion of gel particles according to any one of <1> to <6>, in which an amount of the photopolymerization initiator is 0.5 mass% to 12 mass% with respect to a total solid content of the gel particles.

<8> The water dispersion of gel particles according to any one of <1> to <7>, in which a volume-average particle diameter of the gel particles is 0.05 $\mu$m to 0.60 $\mu$m as measured by light scattering.

<9> The water dispersion of gel particles according to any one of <1> to <8>, which is used for ink jet recording.

<10> The water dispersion of gel particles according to any one of <1> to <9>, in which a total solid content of the gel particles is 50 mass% or greater with respect to a total solid content of the water dispersion.

<11> The water dispersion of gel particles according to <1>, in which the polyfunctional vinyl monomer compound is a trifunctional or greater (meth)acrylate compound, and the polyfunctional thiol compound is a trifunctional or greater thiol compound.

<12> The water dispersion of gel particles according to <1> or <11>, in which the polyfunctional vinyl monomer compound is a polyfunctional urethane acrylate compound.

<13> A method of producing the water dispersion of gel particles according to any one of <1> to <12>, comprising: an emulsification step in which an oil phase component which includes the polyfunctional vinyl monomer compound, the polyfunctional thiol compound, the photopolymerization initiator, and an organic solvent, in which the number

of ethylenic double bonds included in a total amount of the polyfunctional vinyl monomer compound is a C=C number, and in which, when the number of thiol groups included in a total amount of the polyfunctional thiol compound is the number of SH groups, and a ratio of the number of SH groups to the C=C number is 0.20 or greater and less than 1.00 and a water phase component which includes water are mixed and emulsified so as to obtain an emulsion and in which at least one of the oil phase component and the water phase component includes an organic compound having the hydrophilic group; and a gelation step of causing the polyfunctional vinyl monomer compound and the polyfunctional thiol compound to react with each other by heating the emulsion, so as to obtain the water dispersion of gel particles,

wherein whether the particles in the water dispersion are gel particles is checked by the method indicated in the section "Determination of gelling" of the description.

<14> An image forming method comprising: an application step of applying the water dispersion of gel particles according to any one of <1> to <12> to a recording medium; and an irradiation step of irradiating the water dispersion of gel particles applied to the recording medium with active energy rays.

According to one embodiment of the present invention, it is possible to provide a water dispersion of gel particles that can form a film in which hardness and flexibility are compatible with each other and redispersibility is excellent and a producing method thereof.

According to one embodiment of the present invention, it is possible to provide an image forming method that can form an image in which hardness and flexibility are compatible with each other.

## DESCRIPTION OF THE PREFERRED EMBODIMENTS

Hereinafter, specific embodiments of the present invention are described in detail, but the present invention is not limited to the following embodiments.

According to this specification, a numerical range provided by using the expression "to" means a range including numerical values provided before and after the expression "to" as a minimum value and a maximum value.

In this specification, in a case where a plurality of materials corresponding respective components in a composition exist, unless described otherwise, an amount of the respective components in the composition means a total amount of a plurality of materials existing in the composition.

In this specification, with respect to the expression "step", not only in a case where a step is an independent step but also in a case where a step cannot be clearly differentiated from other steps, even if a predetermined purpose is achieved, the step can be included in this expression.

In this specification, the expression "light" is a concept of including active energy rays such as $\gamma$ rays, $\beta$ rays, electron beams, ultraviolet rays, visible rays, and infrared rays.

In this specification, the ultraviolet rays may be referred to as "ultraviolet (UV) light".

In this specification, light generated from a light emitting diode (LED) light source may be referred to as "LED light".

In this specification, a "(meth)acrylic acid" is a concept of including both acrylic acid and methacrylic acid, "(meth)acrylate" is a concept of including both acrylate and methacrylate, and a "(meth)acryloyl group" is a concept of including an acryloyl group and a methacryloyl group.

In this specification, a "thiol group" and a "mercapto group" have the same meaning.

In this specification, an ethylenic double bond may be described as "C=C", and a thioether bond may be described as "-S-".

[Water dispersion of gel particles]

A water dispersion (hereinafter, referred to as the "water dispersion of the present disclosure" or simply referred to as "water dispersion") of gel particles of the present disclosure is a water dispersion in which gel particles having a three-dimensional crosslinked structure including a thioether bond and an ethylenic double bond, having a hydrophilic group, and including a photopolymerization initiator are dispersed in water,

wherein the three-dimensional crosslinked structure includes a structure obtained by reacting a polyfunctional vinyl monomer compound and a polyfunctional thiol compound, wherein if the number of ethylenic double bonds included in a total amount of the polyfunctional vinyl monomer compound is set as a C=C number and the number of thiol groups included in a total amount of the polyfunctional thiol compound is set as the number of SH groups, a ratio of the number of SH groups to the C=C number is 0.20 or greater and less than 1.00.

According to the water dispersion of the present disclosure, a film in which hardness and flexibility are compatible with each other can be formed, and redispersibility is also excellent.

Specifically, according to the water dispersion of the present disclosure, hardness of the film is enhanced by

an ethylenic double bond included in the three-dimensional crosslinked structure of the gel particles, and flexibility of the film is enhanced by a thioether bond included in the three-dimensional crosslinked structure of gel particles.

Particularly, the present inventors have conducted research on the flexibility of the film, in a case where the water dispersion includes gel particles having a three-dimensional crosslinked structure including a thioether bond, it is clear that flexibility of the formed film is prominently enhanced compared with a case where a thioether bond is included but a three-dimensional crosslinked structure is not included.

According to the research of the present inventors, compared with the water dispersion of the present disclosure, it is confirmed that, in a case where an ink composition disclosed in JP2012-149228A is used, flexibility of the formed film (image) is insufficient. Also in a case where a multi-branched polymer disclosed in WO2008/047620A is caused to be contained in an aqueous composition, it is considered that there is a tendency in that flexibility of the formed film (image) is insufficient.

It is considered that this is because a three-dimensional crosslinked structure including a thioether bond is not formed in the above two cases.

Specifically, in the above two cases, in the stage of manufacturing the composition, a thioether bond can be formed by reaction (Michael addition reaction) between a thiol group and an acryloyl group. However, in view of the ratio between the number of thiol groups and the number of acryloyl groups included in a raw material, it is considered that, thioether bonds in an amount in which a three-dimensional crosslinked structure (gel) can be formed are not formed, and thus flexibility of the film is insufficient (for example, see Comparative Example 1).

It is considered that the reason that the water dispersion of the present disclosure has excellent redispersibility is because, if particles have a three-dimensional crosslinked structure (that is, particles are gel particles), a structure of respective particles becomes firm, and as a result, aggregation or unification of particles with each other is suppressed.

Therefore, in a case where a solidified material is formed by evaporating water in a water dispersion, it is considered that particles in a solidified material are easily redispersed in an aqueous liquid, by supplying an aqueous liquid (for example, water, water dispersion, and aqueous solution) to the solidified material.

Hydrophilic groups included in the gel particles obviously contribute to dispersibility and redispersibility of the gel particles.

As described above, in the water dispersion of the present disclosure, as described above, aggregation of particles with each other (gel particles with each other) is suppressed, and thus the water dispersion of the present disclosure has excellent preservation stability.

The water dispersion of the present disclosure contains gel particles including a photopolymerization initiator and an ethylenic double bond, and thus has properties (photocurability) of being cured by irradiation with active energy rays.

Particularly, in the water dispersion of the present disclosure, gel particles include a photopolymerization initiator, and a three-dimensional crosslinked structure of the gel particles has an ethylenic double bond. Therefore, a distance between a photopolymerization initiator and an ethylenic double bond becomes close to each other, so curing sensitivity (hereinafter, simply referred to as "sensitivity") to irradiation of active energy rays is enhanced.

Accordingly, if the water dispersion of the present disclosure is applied to a base material and photocured, a film in which adhesiveness to the base material is excellent, fixing properties to the base material is excellent, and water resistance and solvent resistance are also excellent can be formed.

Here, the "fixing properties of a film" are properties evaluated by an exposure amount until stickiness of a film disappears in a case where a film formed on a base material is exposed (see the following examples).

The fact that the gel particles include a photopolymerization initiator has an advantage in that a photopolymerization initiator (for example, a photopolymerization initiator of which solubility to water is 1.0 mass% or less at 25°C) having low solubility to water can be easily used as a photopolymerization initiator.

That is, the fact that gel particles include a photopolymerization initiator has an advantage in that the used photopolymerization initiator can be selected in a wide range.

Examples of the photopolymerization initiator having low solubility to water include an acylphosphine oxide compound (for example, a monoacylphosphine oxide compound, a bisacylphosphine oxide compound. A bisacylphosphine oxide compound is preferable. The same is applied to the followings).

An acylphosphine oxide compound is a photopolymerization initiator having particularly excellent curing sensitivity with respect to the irradiation of the active energy rays. However, the acylphosphine oxide compound has low solubility with respect to water, and thus there was a problem in that it is difficult to cause the acylphosphine oxide compound to be contained in an aqueous composition (for example, a large amount thereof was not able to cause the acylphosphine oxide compound to be contained in an aqueous composition) in the related art.

In the water dispersion of the present disclosure, if the gel particles include a photopolymerization initiator, an acylphosphine oxide compound of which sensitivity to light is excellent but solubility to water is low can be selected as the photopolymerization initiator.

In a case where the photopolymerization initiator is an acylphosphine oxide compound, sensitivity to light,

particularly, sensitivity to LED light is enhanced.

The wavelength of the LED light is preferably 355 nm, 365 nm, 385 nm, 395 nm, or 405 nm.

<Inclusion>

In this specification, the expression "a photopolymerization initiator is included in gel particles" means that a photopolymerization initiator is included inside the gel particles. Here, the expression "inside the gel particles" means cavities in a three-dimensional crosslinked structure.

In the water dispersion liquid of the present disclosure, in view of curing sensitivity of the film, an inclusion ratio (mass%) of the photopolymerization initiator is preferably 10 mass% or greater, more preferably 50 mass% or greater, even more preferably 70 mass% or greater, even more preferably 80 mass% or greater, even more preferably 90 mass% or greater, even more preferably 95 mass% or greater, even more preferably 97 mass% or greater, and particularly preferably 99 mass% or greater.

In a case where two or more photopolymerization initiators are included in the water dispersion liquid, an inclusion ratio of at least one photopolymerization initiator is preferably in the range described above.

Here, the inclusion ratio (mass%) of the photopolymerization initiator means an amount of the photopolymerization initiator included in the gel particles with respect to the total amount of the photopolymerization initiator in the water dispersion and refers to a value obtained as follows.

-Method of measuring inclusion ratio (mass%) of photopolymerization initiator-

The following operations are performed in the condition of the liquid temperature of 25°C.

In a case where a water dispersion is not contained in a pigment, the following operations are performed using this water dispersion without change. In a case where a water dispersion contains a pigment, a pigment is removed from the water dispersion by centrifugation, and the following operations are performed on the water dispersion from which the pigment is removed.

First, two samples (hereinafter, referred to as "Sample 1" and "Sample 2") in the same amount are collected from the water dispersion which was a measurement target of an inclusion ratio (mass%) of the photopolymerization initiator.

With respect to Sample 1, 100 times by mass of tetrahydrofuran (THF) is mixed with a total solid content of Sample 1 so as to prepare a diluent. Centrifugation is performed in the condition of 40 minutes on the obtained diluent, at 80,000 rpm (round per minute; The same is applied to the followings). A supernatant (hereinafter, referred to as "Supernatant 1") generated by centrifugation is collected. It is considered that all of the photopolymerization initiator included in Sample 1 is extracted to Supernatant 1 according to this operation. The mass of the photopolymerization initiator included in Supernatant 1 collected is measured by liquid chromatography (for example, a liquid chromatography device manufactured by Waters Corporation. The same is applied to the followings). The mass of the obtained photopolymerization initiator is called a "total amount of a photopolymerization initiator".

Centrifugation in the same condition of the centrifugation performed by the diluent was performed on Sample 2. A supernatant (hereinafter, referred to as "Supernatant 2") generated by centrifugation is collected. According to this operation, it is considered that a photopolymerization initiator that is not included in (that is, that is free from) the gel particles is extracted to Supernatant 2 in Sample 2. The mass of the photopolymerization initiator included in Supernatant 2 collected is measured by liquid chromatography. A mass of the obtained photopolymerization initiator is a "free amount of the photopolymerization initiator"

An inclusion ratio (mass%) of the photopolymerization initiator is obtained by the following equation based on the total amount of the photopolymerization initiator and the free amount of the photopolymerization initiator.

Inclusion ratio (mass%) of photopolymerization initiator=((total amount of photopolymerization initiator-free amount of photopolymerization initiator)/total amount of photopolymerization initiator)× 100

In a case where the water dispersion includes two or more photopolymerization initiators, an entire inclusion ratio of two or more of the photopolymerization initiators may be obtained by using a total amount of the two or more photopolymerization initiators is set as a "total amount of the photopolymerization initiator" and using a sum of free amounts of the two or more photopolymerization initiators as a "free amount of the photopolymerization initiator", and an inclusion ratio of any one of the photopolymerization initiators may be obtained by using an amount of any one photopolymerization initiator as a "total amount of the photopolymerization initiator" and using a free amount of one of the photopolymerization initiators as a "free amount of the photopolymerization initiator".

With respect to the water dispersion, whether components other than the photopolymerization initiator are included in the gel particles can be confirmed in the same manner as the method of examining whether the photopolymerization initiator is included.

However, with respect to the compound having a molecular weight of 1,000 or greater, masses of the compounds

included in Supernatants 1 and 2 are measured by gel permeation chromatography (GPC), so as to obtain inclusion ratios (mass%) of the compounds as a "total amount of the compound" and a "free amount of the compound".

<Three-dimensional crosslinked structure>

In the present disclosure, the "three-dimensional crosslinked structure" refers to a three-dimensional mesh structure formed by crosslinking. In the water dispersion according to the present disclosure, the gel particles are formed by forming a three-dimensional crosslinked structure in the particles.

That is, in the specification, the expression "the particles have a three-dimensional crosslinked structure" has the same meaning as the expression "the particles are the gel particles".

Whether the water dispersion of the present disclosure includes gel particles having a three-dimensional crosslinked structure is checked as follows. The following operations are performed in the temperature condition of 25°C.

In a case where the water dispersion is not contained in the pigment, the following operations are performed by using this water dispersion without change, and in a case where the water dispersion is contained in the pigment, a pigment was removed from the water dispersion by centrifugation and the following operations are performed on the water dispersion from which the pigment is removed.

Samples are gathered from the water dispersion. With respect to the gathered samples, 100 times by mass of tetrahydrofuran (THF) is added and mixed with respect to the total solid content of the sample so as to prepare a diluent. With respect to the obtained diluent, centrifugation is performed under the conditions of 80,000 rpm and 40 minutes. After the centrifugation, whether there are residues is visually checked. In a case where there are residues, the residues are re-dispersed with water, a redispersion liquid is prepared, and a particle size distribution of the redispersion liquid is measured by a light scattering method by using a wet-type particle size distribution measuring device (LA-910, manufactured by Horiba Ltd.).

A case where particle size distribution can be checked by the operation described above is determined that the water dispersion includes gel particles having a three-dimensional crosslinked structure.

-Degree of crosslinking (Degree of gelling)-

A degree of gelling (hereinafter, referred to as "degree of crosslinking") of the gel particles can be determined by turbidity of a dimethylsulfoxide (DMSO) solution of the gel particles.

Specifically, first, a water dispersion of which the content of the gel particles is 20 mass% is prepared. In a case where the content of the gel particles in the water dispersion that becomes a measurement target is 20 mass%, this water dispersion is used without change. In a case where the content of the gel particles in the water dispersion that becomes a measurement target is not 20 mass%, the content of the gel particles in the water dispersion is adjusted to 20 mass% by concentration or dilution, to be used.

Subsequently, 7 g of dimethylsulfoxide (DMSO) is added to 1 g of the water dispersion in which the content of the gel particles is 20 mass%, and subsequently stirring is performed for 30 minutes, so as to prepare a dimethylsulfoxide (DMSO) solution of the gel particles.

The turbidity of the prepared DMSO solution is measured by using a quartz cell of 10 mm by an integrating spherical turbidity meter (for example, "SEP-PT-706D" manufactured by Mitsubishi Chemical Corporation). A degree of gelling (degree of crosslinking) is determined with the obtained turbidity.

The following operation is performed in the condition of a liquid temperature of 25°C.

The turbidity of the DMSO solution is preferably 1 ppm or greater, more preferably 3 ppm or greater, and particularly preferably 5 ppm or greater.

The three-dimensional crosslinked structure includes a structure obtained by reacting a polyfunctional vinyl monomer compound and a polyfunctional thiol compound, wherein if the number of ethylenic double bonds included in a total amount of the polyfunctional vinyl monomer compound is set as a C=C number and the number of thiol groups included in a total amount of the polyfunctional thiol compound is set as the number of SH groups, a ratio of the number of SH groups to the C=C number is 0.20 or greater and less than 1.00. The three-dimensional crosslinked structure includes at least one of a vinyl group and a 1-methylvinyl group as a group including an ethylenic double bond. In view of hardness of the film, flexibility of the film, and fixing properties (that is, reactivity at the time of photocuring), the three-dimensional crosslinked structure preferably includes a (meth)acryloyl group.

In view of flexibility of the formed film and fixing properties (that is, reactivity at the time of photocuring), the (meth)acryloyl group is preferably an acryloyl group.

In a case where the three-dimensional crosslinked structure includes a (meth)acryloyl group, the three-dimensional crosslinked structure preferably includes a urethane bond. If the three-dimensional crosslinked structure includes a urethane bond, both of the flexibility and the hardness of the formed film are further enhanced.

The three-dimensional crosslinked structure particularly preferably includes an acryloyl group and a urethane

bond.

The three-dimensional crosslinked structure includes a thioether bond and an ethylenic double bond. In view of easiness of forming a three-dimensional crosslinked structure including a thioether bond and an ethylenic double bond, a structure (that is, a structure obtained by reacting a polyfunctional vinyl monomer compound and a polyfunctional thiol compound with each other) of a reaction product between a polyfunctional vinyl monomer compound and a polyfunctional thiol compound is included.

Here, the polyfunctional vinyl monomer compound has at least one of a vinyl group and a 1-methylvinyl group as a functional group in one molecule, and refers to a compound of which a total number of vinyl groups and 1-methylvinyl groups in one molecule is 2 or greater.

Hereinafter, a vinyl group and a 1-methylvinyl group are collectively referred to as "vinyl groups". Here, the "vinyl groups" may be a portion in a structure of a (meth)acryloyl group.

The polyfunctional thiol compound refers to a compound having two or more thiol groups (-SH groups) as functional groups.

In view of easiness of forming a three-dimensional crosslinked structure including a thioether bond and an ethylenic double bond, the polyfunctional vinyl monomer compound is preferably a trifunctional or greater vinyl monomer compound (that is, a compound having three or more vinyl groups in one molecule).

In view of easiness of forming a three-dimensional crosslinked structure including a thioether bond and an ethylenic double bond, the polyfunctional thiol compound is preferably a trifunctional or greater thiol compound (that is, a compound having three or more thiol groups in one molecule).

The reaction between the polyfunctional vinyl monomer compound and the polyfunctional thiol compound is preferably a reaction in which a thioether bond is formed by reaction between vinyl groups of the polyfunctional vinyl monomer compound and a thiol group of the polyfunctional thiol compound.

A more preferable aspect of the reaction between the polyfunctional vinyl monomer compound and the polyfunctional thiol compound is an aspect in which a thioether bond is formed by reaction of vinyl groups of a portion of a polyfunctional vinyl monomer compound with a thiol group of at least a portion (preferably all) of the polyfunctional thiol compound.

In this aspect, vinyl groups in a polyfunctional vinyl monomer compound remain after the reaction, and thus a three-dimensional crosslinked structure having an ethylenic double bond is formed.

When the number of ethylenic double bonds included in the total amount of the polyfunctional vinyl monomer compound is set as a C=C number, and the number (hereinafter, also referred to as a ratio [the number of SH groups/C=C number]) of thiol groups included in the total amount of the polyfunctional thiol compound is set as the number of SH groups, a ratio of the number of SH groups to the C=C number is 0.20 or greater and less than 1.00.

If the ratio [the number of SH groups/C=C number] is 0.20 or greater, more thioether bonds are formed compared with a case where the ratio [the number of SH groups/C=C number] is less than 0.20, and thus a three-dimensional crosslinked structure (that is, gel particles) is effectively formed. Accordingly, flexibility of the formed film is enhanced. Redispersibility of the water dispersion is enhanced.

Since flexibility of the formed film and redispersibility of the water dispersion is enhanced, the ratio [the number of SH groups/C=C number] is preferably 0.30 or greater.

Meanwhile, if the ratio [the number of SH groups/C=C number] is less than 1.00, an ethylenic double bond (C=C) remains in a three-dimensional crosslinked structure, and hardness of the formed film is enhanced.

Since hardness of the film is enhanced, the ratio [the number of SH groups/C=C number] is preferably 0.90 or less and more preferably 0.80 or less.

Since a thioether bond is formed, it is preferable that the polyfunctional vinyl monomer compound is the polyfunctional (meth)acrylate compound by reaction with a polyfunctional thiol compound.

Here, the polyfunctional (meth)acrylate compound has (meth)acryloyl groups as a functional group in one molecule and refers to a compound in which a total number of (meth)acryloyl groups in one molecule is 2 or greater.

The polyfunctional (meth)acrylate compound is preferably a trifunctional or greater (meth)acrylate compound (that is, a compound having three or more (meth)acryloyl groups in one molecule).

In a case where the polyfunctional vinyl monomer compound has a polyfunctional (meth)acrylate compound, the three-dimensional crosslinked structure is preferably a structure obtained by Michael addition reaction (1,4-addition reaction) of the polyfunctional thiol compound to the polyfunctional (meth)acrylate compound.

The Michael addition reaction is preferable reaction in which at least a portion (preferably all) of a thiol group included in the polyfunctional thiol compound is 1,4-added to the (meth)acryloyl group of only a portion of the polyfunctional vinyl monomer compound.

Since the flexibility of the film and fixing properties (reactivity at the time of photocuring) are more enhanced, the polyfunctional (meth)acrylate compound is preferably a polyfunctional acrylate compound. Since flexibility and hardness of the film are enhanced, a polyfunctional urethane acrylate compound is more preferable.

According to the present disclosure, gel particles having a hydrophilic group mean gel particles having at least

one of a hydrophilic group included in a three-dimensional crosslinked structure and hydrophilic groups that are not included in a three-dimensional crosslinked structure.

That is, in the gel particles, the hydrophilic groups may exist as portions of the three-dimensional crosslinked structure and may exist as portions except for the three-dimensional crosslinked structure.

Here, the expression "hydrophilic groups exist as portions of the three-dimensional crosslinked structure" means that the hydrophilic groups form covalent bonds with portions other than the hydrophilic groups of the three-dimensional crosslinked structure.

The expression "hydrophilic groups exist as portions other than the three-dimensional crosslinked structure" means that gel particles include an organic compound having a hydrophilic group independently from the three-dimensional crosslinked structure.

Even in any cases, it is preferable that the hydrophilic group exists in a surface portion (contact portion to water) of the gel particles.

In view of dispersibility of the gel particles and preservation stability of water dispersion, the hydrophilic group included in the gel particles is preferably a carboxyl group, a salt of a carboxyl group, a sulfo group, a salt of a sulfo group, a sulfuric acid group, a salt of a sulfuric acid group, a phosphonic acid group, a salt of a phosphonic acid group, a phosphoric acid group, a salt of a phosphoric acid group, ammonium base, or a salt of a alkyleneoxy group.

The gel particles may have a hydrophilic group singly or may have two or more kinds thereof.

A salt of a carboxyl group, a salt of a sulfo group, a salt of a sulfuric acid group, a salt of a phosphonic acid group, and a salt of a phosphoric acid group described above may be salts formed in the course of production of gel particles or by neutralization.

A salt of a carboxyl group, a salt of a sulfo group, a salt of a sulfuric acid group, a salt of a phosphonic acid group, and a phosphoric acid group described above each are preferably alkali metal salts (for example, a sodium salt and a potassium salt).

As the hydrophilic group included in the gel particles, in view of dispersibility of the gel particles and preservation stability of the water dispersion, at least one group selected from the group consisting of a salt of a carboxyl group, a salt of a sulfo group, a salt of a sulfuric acid group, and an alkyleneoxy group is particularly preferable.

In the water dispersion of the present disclosure, an amount of the photopolymerization initiator included in the gel particles is preferably 0.5 mass% to 12 mass% with respect to a total solid content of gel particles.

If the amount of the photopolymerization initiator is 0.5 mass% or greater, sensitivity is further enhanced, and, as a result, fixing properties and the like are further enhanced.

In view of fixing properties and the like, an amount of the photopolymerization initiator is more preferably 2.0 mass% or greater, even more preferably 4.0 mass% or greater, and particularly preferably 5.0 mass% or greater.

If the amount of the photopolymerization initiator is 12 mass% or less, dispersion stability of the gel particles is further enhanced, and, as a result, preservation stability of the water dispersion liquid is enhanced.

In view of preservation stability and the like, an amount of the photopolymerization initiator is more preferably 10 mass% or less and even more preferably 8.0 mass% or less.

In the water dispersion of the present disclosure, a volume-average particle diameter of the gel particles is preferably 0.05 μm to 0.60 μm.

If the volume-average particle diameter of the gel particles is 0.05 μm or greater, the gel particles are more easily produced, and preservation stability of the water dispersion is further enhanced.

The volume-average particle diameter of the gel particles is more preferably 0.10 μm or greater.

Meanwhile, if the volume-average particle diameter of the gel particles is 0.60 μm or less, redispersibility, jettability, and preservation stability of the water dispersion is further enhanced.

Since redispersibility of the water dispersion is further enhanced, the volume-average particle diameter of the gel particles is more preferably 0.50 μm or less, even more preferably 0.40 μm or less, and particularly preferably 0.30 μm or less.

In this specification, the volume-average particle diameter of the gel particles refers to a value measured by a light scattering method.

The measurement of the volume-average particle diameter of the gel particles by the light scattering method is performed by using, for example, LA-910 (manufactured by Horiba, Ltd.).

The water dispersion of the present disclosure can be suitably used as a liquid for forming a film (for example, an image) on a base material (for example, a recording medium).

Examples of the liquid include an ink composition (for example, an ink composition for ink jet recording) for forming an image on a base material as a recording medium and a coating solution for forming a coated film on a base material.

Particularly, the water dispersion of the present disclosure is preferably a water dispersion (that is, the water dispersion of the present disclosure is an ink composition for ink jet recording) used in ink jet recording.

The ink composition (preferably ink composition for ink jet recording) which is one for the use of the water

dispersion of the present disclosure may be an ink composition that contains a colorant or a transparent ink composition (also referred to as a "clear ink") that does not contain a colorant.

The same is applied to a coating solution which is another use of the water dispersion of the present disclosure.

The base material for forming a film is not particularly limited, and well-known base materials can be used.

Examples of the base material include paper, paper obtained by laminating plastic (for example, polyethylene, polypropylene, or polystyrene), a metal plate (for example, a plate of metal such as aluminum, zinc, or copper), a plastic film (for example, a film of a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, an acrylic resin, and the like), paper obtained by laminating or vapor-depositing the above metal, and a plastic film obtained by laminating or vapor-depositing the above metal.

Since it is possible to form a film having excellent adhesiveness on a base material, the water dispersion of the present disclosure is particularly suitable for the use of forming a film on a nonabsorbable base material.

The nonabsorbable base material is preferably a plastic base material such as a polyvinyl chloride (PVC) base material, a polyethylene terephthalate (PET) base material, a polyethylene (PE) base material, a polystyrene (PS) base material, a polypropylene (PP) base material, a polycarbonate (PC) base material, and an acrylic resin base material.

Since a film having excellent flexibility can be formed, the water dispersion of the present disclosure is particularly suitable for the use of forming a film on a base material having flexibility.

As the base material having flexibility, a base material which is the same as the base material exemplified as the nonabsorbable base material is preferable.

Hereinafter, respective components of the water dispersion of the present disclosure are described.

<Gel particles>

The water dispersion of the present disclosure includes gel particles dispersed in water.

The gel particles have a three-dimensional crosslinked structure including a thioether bond and an ethylenic double bond, have a hydrophilic group, and include a photopolymerization initiator.

As described above, the three-dimensional crosslinked includes a structure obtained by reacting a polyfunctional vinyl monomer compound and a polyfunctional thiol compound, wherein if the number of ethylenic double bonds included in a total amount of the polyfunctional vinyl monomer compound is set as a C=C number and the number of thiol groups included in a total amount of the polyfunctional thiol compound is set as the number of SH groups, a ratio of the number of SH groups to the C=C number is 0.20 or greater and less than 1.00.

The polyfunctional vinyl monomer compound and the polyfunctional thiol compound may be used singly or two or more kinds thereof may be used in combination.

(Polyfunctional vinyl monomer compound)

As the polyfunctional vinyl monomer compound, a compound represented by Formula (1A) or (1B) is preferable.

That is, the compound represented by Formula (1A) is an example of a polyfunctional (meth)acrylate compound.

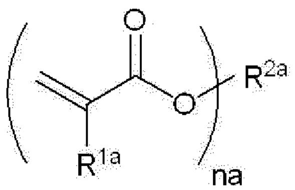

(1A)

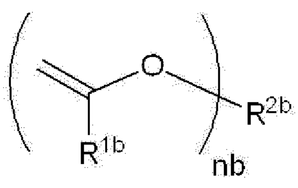

(1B)

In Formulae (1A) and (1B), $R^{1a}$ and $R^{1b}$ each independently represent a hydrogen atom or a methyl group, $R^{2a}$ represents an na-valent linking group, $R^{2b}$ represents an nb-valent linking group, na and nb each independently represent an integer of 2 to 20.

The weight-average molecular weight of the compound represented by Formula (1A) or (1B) is preferably 200 to 2,000, more preferably 200 to 1,500, and more preferably 250 to 1,200.

The na-valent linking group represented by $R^{2a}$ is preferably a hydrocarbon group which may contain an oxygen atom or a nitrogen atom.

For example, a terminal portion of the na-valent linking group represented by $R^{2a}$ may form a urethane bond together with -O- in Formula (1A).

The hydrocarbon group may include a hydroxy group.

The preferable aspect of the nb-valent linking group represented by $R^{2b}$ is the same as the preferable aspect of the na-valent linking group represented by $R^{2a}$.

na represents an integer of 2 to 20, preferably represents an integer of 3 to 20, more preferably an integer of 3 to 10, even more preferably an integer of 3 to 6, and particularly preferably an integer of 4 to 6.

A preferable range of nb is also the same as the preferable range of na.

Hereinafter, specific examples of the na-valent linking group represented by $R^{2a}$ and the nb-valent linking group represented by $R^{2b}$ are provided, but the na-valent linking group and the nb-valent linking group are not limited to the following groups.

In the groups below, * represents a bonding position.

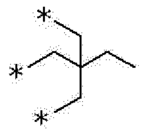
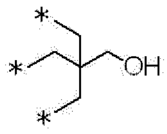
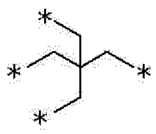
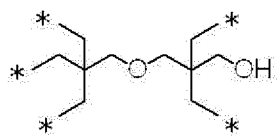
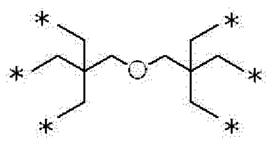
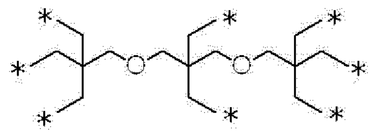
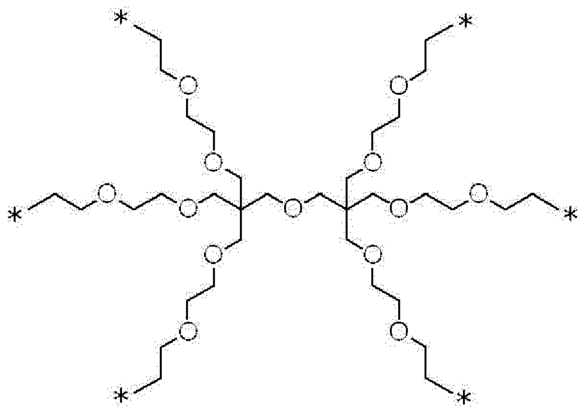
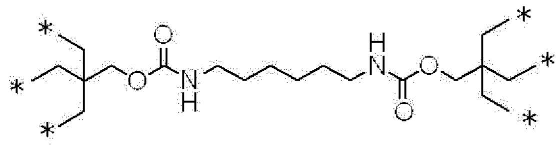
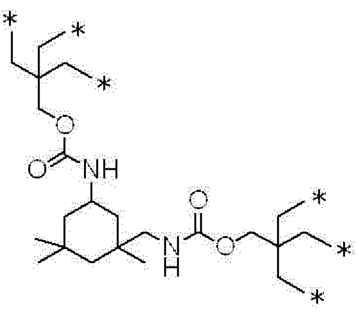
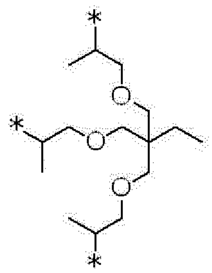
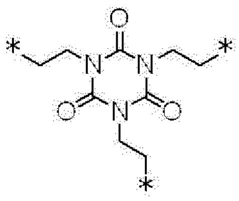

Specific examples of the polyfunctional vinyl monomer compound include acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate, bis(4-acryloxypolyethoxyphenyl) propane, polyethylene glycol diacrylate, polypropylene glycol diacrylate, dipentaerythritol tetraacrylate, trimethylolpropane triacrylate (for example, A-TMPT manufactured by Shin Nakamura Chemical Co., Ltd.), pentaerythritol triacrylate (for example, A-TMM-3L manufactured by Shin Nakamura Chemical Co., Ltd.), pentaerythritol tetraacrylate (for example, A-TMMT manufactured by Shin Nakamura Chemical Co., Ltd.), ditrimethylolpropane tetraacrylate (for example, AD-TMP manufactured by Shin Nakamura Chemical Co., Ltd.), dipentaerythritol pentaacrylate (for example, SR-399E manufactured by Sartomer), dipentaerythritol hexaacrylate (for example, A-DPH manufactured by Shin Nakamura Chemical Co., Ltd.), oligoester acrylate, N-methylol acrylamide, diacetone acrylamide, epoxy acrylate, isobornyl acrylate, dicyclopentenyl acrylate, dicyclopentenyloxyethyl

acrylate, dicyclopentanyl acrylate, neopentyl glycol propylene oxide adduct diacrylate (NPGPODA); KAYARAD (registered trademark) DPEA-12 manufactured by Nippon Kayaku Co., Ltd., and VISCOAT (registered trademark) #802 manufactured by Osaka Organic Chemical Industry Ltd.; and methacrylate compounds such as methyl methacrylate, n-butyl methacrylate, allyl methacrylate, glycidyl methacrylate, benzyl methacrylate, dimethylaminomethyl methacrylate, polyethylene glycol dimethacrylate, polypropylene glycol dimethacrylate, 2,2-bis(4-methacryloxypolyethoxyphenyl) propane, and trimethylolpropane trimethacrylate (for example, TMPT manufactured by Shin Nakamura Chemical Co., Ltd.).

Examples of the polyfunctional vinyl monomer compound include allyl glycidyl ether, diallyl phthalate, triallyl trimellitate, trimethylolpropane trivinyl ether (for example, TMPTV manufactured by Sigma-Aldrich Co., Llc.).

Examples of the polyfunctional vinyl monomer compound include the followings.

Examples of the commercially available product include urethane acrylate such as AH-600, AT-600, UA-306H, UA-306T, UA-306I, UA-510H, UF-8001G, DAUA-167 (manufactured by Kyoeisha Chemical, Co., Ltd.), UV-1700B, UV-6300B, UV-7550B, UV7600B, UV-7605B, UV-7620EA, UV-7630B, UV-7640B, UV-7650B, UV-6630B, UV7000B, UV-7510B, UV-7461TE, UV-2000B, UV-2750B, UV-3000B, UV-3200B, UV-3210EA, UV-3300B, UV-3310B, UV-3500BA, UV-3520TL, UV-3700B, and UV-6640B (manufactured by The Nippon Synthetic Chemical Inc.);

ethoxylated or propoxylated acrylate such as SR415, SR444, SR454, SR492, SR499, CD501, SR502, SR9020, CD9021, SR9035, and SR494 (manufactured by Sartomer); and
an isocyanur monomer such as A-9300 and A-9300-1CL (manufactured by Shin-Nakamura Chemical Co., Ltd.).

The polyfunctional vinyl monomer compound can be appropriately selected from well-known compounds (for example, polyfunctional (meth)acrylate compounds disclosed in WO2008/047620A, urethane(meth)acrylate disclosed in JP2012-149228A) to be used.

(Polyfunctional thiol compound)

As the polyfunctional thiol compound, a compound represented by Formula (2) below is preferable.

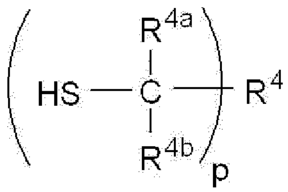

(2)

In Formula (2), $R^4$ represents a single bond or a p-valent linking group.
p represents an integer of 2 to 6.

Here, when $R^4$ is a single bond, p is 2.

$R^{4a}$ and $R^{4b}$ each independently represent a hydrogen atom or a methyl group.

The weight-average molecular weight of the compound represented by Formula (2) is preferably 200 to 2,000, more preferably 200 to 1,500, and even more preferably 300 to 1,000.

As the p-valent linking group represented by $R^4$, a hydrocarbon group that may include an oxygen atom, a sulfur atom, or a nitrogen atom is preferable.

As the p-valent linking group represented by $R^4$, for example, a hydrocarbon group that may include an ether bond, an ester bond, an amide bond, and a urea bond is preferable.

It is preferable that at least one of $R^{4a}$ and $R^{4b}$ is a hydrogen atom, and it is more preferable that both of $R^{4a}$ and $R^{4b}$ are hydrogen atoms.

Hereinafter, specific examples of the p-valent linking group represented by $R^4$ are provided, but the p-valent linking group represented by $R^4$ is not limited to the following groups.

In the following groups, * represents a bonding position.

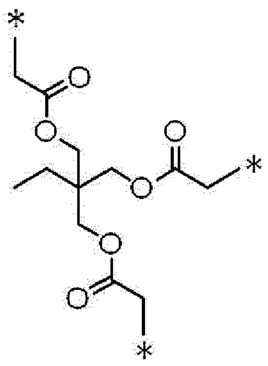

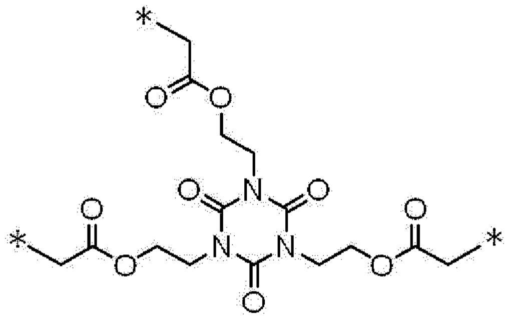

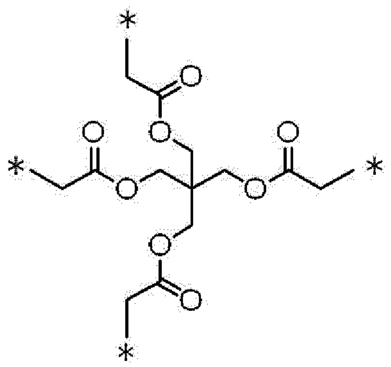

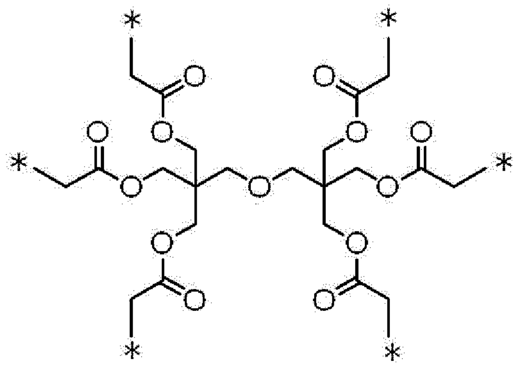

Examples of the polyfunctional thiol compound include pentaerythritol tetrakis(3-mercaptopropionate) (hereinafter, referred to as "PEMP"), trimethylolpropane tris(3-mercaptopropionate) (hereinafter, referred to as "TMMP"), tris-[(3-mercaptopropionyloxy)-ethyl]-isocyanurate (hereinafter, referred to as "TEMPIC"), tetraethylene glycol bis(3-mercaptopropionate), dipentaerythritol hexakis(3-mercaptopropionate) (hereinafter, referred to as "DPMP"), pentaerythritol tetrakis(3-mercaptobutyrate), and trimethylolpropane tris(3-mercaptobutyrate).
A polyfunctional thiol compound can be suitably selected from the well-known compounds (for example, polyvalent mercapto compounds disclosed in WO2008/047620A and mercapto group-containing compounds disclosed in JP2012-149228A).

(Photopolymerization initiator)

The gel particles include a photopolymerization initiator.
The inclusion is as described above.
The water dispersion of the present disclosure may include only one kind of photopolymerization initiators or may include two or more kinds thereof. For example, the gel particles may include only one kind of photopolymerization initiators or may include two or more kinds thereof.
The preferable range of the amount of the photopolymerization initiator is as described above.
The photopolymerization initiator is a compound that absorbs active energy rays and generates radicals which are polymerization initiating species.
Examples of the active energy rays include $\gamma$ rays, $\beta$ rays, electron beams, ultraviolet rays, visible light, and infrared rays.
As the photopolymerization initiator, the well-known compounds can be used. However, examples of the preferable photopolymerization initiator include (A) a carbonyl compound such as aromatic ketones, (b) an acylphosphine oxide compound, (c) an aromatic onium salt compound, (d) organic peroxide, (e) a thio compound, (f) a hexaarylbiimidazole compound, (g) a ketoxime ester compound, (h) a borate compound, (i) an azinium compound, (j) a metallocene compound, (k) an active ester compound, (1) a compound having a carbon halogen bond, and (m) an alkylamine compound.
These photopolymerization initiators may use compounds of (a) to (m) singly or two or more kinds thereof in combination.
Preferable examples of (a) the carbonyl compound, (b) the acylphosphine oxide compound, and (e) the thio compound include compounds having a benzophenone skeleton or a thioxanthone skeleton disclosed in "RADIATION

CURING IN POLYMER SCIENCE AND TECHNOLOGY", J. P. FOUASSIER, J. F. RABEK (1993), pp. 77 to 117.

More preferable examples thereof include α-thiobenzophenone compounds disclosed in JP1972-6416A (JP-S47-6416A), a benzoin ether compound disclosed in JP1972-3981A (JP-S47-3981A), an α-substituted benzoin compound JP1972-22326A (JP-S47-22326A), a benzoin derivative disclosed in JP1972-23664A (JP-S47-23664A), aroylphosphonic acid ester disclosed in JP1982-30704A (JP-S57-30704A), dialkoxybenzophenone disclosed in JP1985-26483A (JP-S60-26483A), benzoin ethers disclosed in JP1985-26403A (JP-S60-26403A) and JP1987-81345A (JP-S62-81345A), α-aminobenzophenones disclosed in JP1989-34242A (JP-H01-34242A), US4,318,791A, and EP0284561A1, p-di(dimethylamino benzoyl) benzene disclosed in JP1990-211452A (JP-H02-211452A), thio-substituted aromatic ketone disclosed in JP1986-194062A (JP-S61-194062A), acyl phosphine sulfide disclosed in JP1990-9597A (JP-H02-9597A), acyl phosphine disclosed in JP1990-9596A (JP-H02-9596A), thioxanthones as disclosed in JP1988-61950A (JP-S63-61950A), and coumarin disclosed in JP1984-42864A (JP-S59-42864A).

Polymerization initiators disclosed in JP2008-105379A or JP2009-114290A are also preferable.

Among these photopolymerization initiators, (a) the carbonyl compound and (b) the acylphosphine oxide compound are more preferable. Specific examples thereof include bis(2,4,6-trimethylbenzoyl)-phenylphosphine oxide (for example, IRGACURE (Registered trademark) 819: manufactured by BASF SE), 2-(dimethylamine)-1-(4-morpholinophenyl)-2-benzyl-1-butanone (for example, IRGACURE (Registered trademark) 369: manufactured by BASF SE), 2-methyl-1-(4-methylthiophenyl)-2-morpholinopropan-1-one (for example, IRGACURE (Registered trademark) 907: manufactured by BASF SE), 1-hydroxy-cyclohexyl-phenyl-ketone (for example, IRGACURE (Registered trademark) 184: manufactured by BASF SE), and 2,4,6-trimethylbenzoyl-diphenyl-phosphine oxide (for example, DAROCUR (Registered trademark) TPO and LUCIRIN (Registered trademark) TPO: all manufactured by BASF SE).

Among these, in view of sensitivity enhancement and suitability to LED light, (b) the acylphosphine oxide compound is preferable, a monoacylphosphine oxide compound (particularly preferably 2,4,6-trimethylbenzoyl-diphenylphosphine oxide (for example, DAROCUR TPO or LUCIRIN TPO)) or a bisacylphosphine oxide compound (particularly preferably bis(2,4,6-trimethylbenzoyl)-phenylphosphine oxide (for example, IRGACURE 819)) is more preferable.

(Hydrophilic group)

The gel particles have a hydrophilic group.

An aspect in which the gel particles have a hydrophilic group and preferable ranges of hydrophilic groups are as described above.

(Organic compound having hydrophilic group)

As a specific aspect in which the gel particles have a hydrophilic group, an aspect in which the gel particles include at least one organic compound having a hydrophilic group can be exemplified.

As the organic compound having a hydrophilic group, an organic compound having at least one selected from the group consisting of a carboxyl group, a salt of a carboxyl group, a sulfo group, a salt of a sulfo group, a sulfuric acid group, a salt of a sulfuric acid group, a phosphonic acid group, a salt of a phosphonic acid group, a phosphoric acid group, a salt of a phosphoric acid group, ammonium base, and an alkyleneoxy group is preferable.

As the organic compound having a hydrophilic group, in addition to a hydrophilic group, a surfactant having a long chain hydrophobic group is preferable.

As the surfactant, for example, surfactants disclosed in "Surfactant Handbook" (Ichiro Nishi et al., published by Sangyo Tosho (1980)) can be used.

Specific examples of the surfactant include an alkyl sulfuric acid group having a salt of a sulfuric acid group as a hydrophilic group, an alkyl sulfuric acid salt having a salt of a sulfo group as a hydrophilic group, and an alkyl benzene sulfuric acid salt having a salt of a sulfo group as a hydrophilic group.

Among these, an alkyl sulfuric acid salt is preferable, an alkyl sulfuric acid salt having an alkyl group having 8 to 20 carbon atoms (more preferably 12 to 18 carbon atoms) is more preferable, sodium dodecyl sulfate or sodium hexadecyl sulfate is even more preferable, and sodium dodecyl sulfate is particularly preferable.

Examples of the organic compound having a hydrophilic group include (meth)acrylic acid or a salt thereof, as an organic compound having a carboxyl group or a salt of a carboxyl group.

When the water dispersion of the present disclosure is produced, as one of the raw materials, a salt of a carboxyl group may be generated from a carboxyl group of (meth)acrylic acid by using (meth)acrylic acid which is an organic compound having a hydrophilic group and performing neutralization in the course of producing the water dispersion.

The neutralization can be performed by using inorganic base such as sodium hydroxide or potassium hydroxide and organic base such as triethylamine (hereinafter, the same is applied throughout).

Examples of the organic compound having a hydrophilic group include polyalkylene glycol (meth)acrylate as an organic compound having an alkyleneoxy group.

As polyalkylene glycol (meth)acrylate, polyalkylene glycol mono(meth)acrylate, polyalkylene glycol di(meth)acrylate, or alkoxy polyalkylene glycol mono(meth)acrylate is preferable.

As all of the polyalkylene glycol (meth)acrylate, a compound of which the number of repetition of an alkyleneoxy group is 1 to 200 (more preferably 2 to 150 and more preferably 50 to 150) is preferable.

The number of carbon atoms of the alkyleneoxy group in polyalkylene glycol (meth)acrylate is preferably 1 to 8, more preferably 2 to 4, and particularly preferably 2 or 3 (that is, the alkyleneoxy group is an ethyleneoxy group or a propyleneoxy group).

The number of carbon atoms of the alkoxy group in alkoxy polyalkylene glycol mono(meth)acrylate is preferably 1 to 20, more preferably 1 to 2, and particularly preferably 1 (that is, the alkoxy group is a methoxy group).

As polyalkylene glycol (meth)acrylate, methoxy polyethylene glycol methacrylate is particularly preferable.

As polyalkylene glycol (meth)acrylate, a commercially available product can be used.

Examples of the commercially available product include BLEMMER (Registered trademark) series manufactured by NOF Corporation.

Examples of the organic compound having an alkyleneoxy group include polyethylene oxide, polypropylene oxide, polytetramethylene oxide, polystyrene oxide, polycyclohexylene oxide, a polyethylene oxide-polypropylene oxide block copolymer, and a polyethylene oxide-polypropylene oxide random copolymer, in addition to polyalkylene glycol (meth)acrylate.

Examples of the organic compound having a hydrophilic group include a sulfonic acid compound such as 2-acrylamido-2-methylpropanesulfonic acid (hereinafter also referred to as "AMPS"), vinyl sulfonic acid, vinyl sulfate, and sulfopropyl acrylate, or a salt thereof.

In order to produce the water dispersion of the present disclosure, a salt of a sulfo group may be generated by using an organic compound (for example, 2-acrylamido-2-methylpropanesulfonic acid) having a sulfo group as one of raw materials and performing neutralization in the course of producing the water dispersion.

<Total solid content of gel particles>

The total solid content of the 1 gel particles in the water dispersion of the present disclosure is preferably 1 mass% to 50 mass%, more preferably 3 mass% to 40 mass%, even more preferably 5 mass% to 30 mass%, and particularly preferably 10 mass% to 30 mass% with respect to a total amount of the water dispersion.

If the total solid content of the gel particles is 1 mass% or greater, hardness and flexibility of the film are further enhanced.

If the total solid content of the gel particles is 50 mass% or less, preservation stability is further enhanced.

The total solid content of the gel particles is a value including components such as photopolymerization initiators existing inside (cavities of a three-dimensional crosslinked structure) the gel particles.

The total solid content of the gel particles in the water dispersion of the present disclosure is preferably 50 mass% or greater, more preferably 60 mass% or greater, even more preferably 70 mass% or greater, even more preferably 80 mass% or greater, and even more preferably 85 mass% or greater with respect to the total solid content of the water dispersion.

The upper limit of the total solid content of the gel particles may be 100 mass% with respect to the total solid content of the water dispersion. In a case where the water dispersion include solid components other than gel particles, the upper limit thereof is preferably 99 mass% or less and more preferably 95 mass% or less.

<Water>

The water dispersion of the present disclosure includes water as the dispersion medium of the gel particles.

That is, since the water dispersion of the present disclosure is an aqueous composition, the water dispersion of the present disclosure is excellent compared with a solvent-based composition, in view of reduction of environmental burden, workability, and the like.

The amount of water in the water dispersion of the present disclosure is not particularly limited. However, the amount thereof is preferably 10 mass% to 99 mass%, more preferably 20 mass% to 95 mass%, even more preferably 30 mass% to 95 mass%, even more preferably 50 mass% to 95 mass%, even more preferably 55 mass% to 95 mass%, and particularly preferably 60 mass% to 90 mass% with respect to a total amount of the water dispersion.

<Colorant>

The water dispersion of the present disclosure may include at least one colorant.

In a case where the water dispersion includes a colorant, the colorant may be included in the gel particles or may not be included in the gel particles.

The colorant is not particularly limited and can be arbitrarily selected from well-known color materials such as a pigment, a water soluble dye, and a dispersed dye. Among these, in view of excellent weather resistance and opulent color reproducibility, it is more preferable that a pigment is included.
The pigment is not particularly limited, and can be appropriately selected depending on the purposes. Examples of the pigment include well-known organic pigments and inorganic pigments, and also include resin particles colored with a dye, a commercially available pigment dispersion, or a surface-treated pigment (for example, a dispersion obtained by dispersing a pigment as a dispersion medium in water, a liquid organic compound, or an insoluble resin and a dispersion obtained by treating a pigment surface with a resin or a pigment derivative).
Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, and a white pigment.
In a case where the pigment is used as a colorant, when pigment particles are prepared, a pigment dispersing agent may be used, if necessary.
With respect to the colorant and pigment dispersing agent such as a pigment, paragraphs 0180 to 0200 of JP2014-040529A can be suitably referred to.

<Other components>

The water dispersion of the present disclosure may contain other components in addition to the above.
The other components may be included in the gel particles or may not be included in the gel particles.

(Sensitizing agent)

The water dispersion of the present disclosure may contain a sensitizing agent.
If the water dispersion of the present disclosure contains a sensitizing agent, decomposition of the photopolymerization initiator due to the irradiation with active energy rays can be promoted.
The sensitizing agent is a material that absorbs specific active energy rays and in an electron excited state.
The sensitizing agent in an electron excited state comes into contact with a photopolymerization initiator and generates an action such as electron transfer, energy transfer, heat generation. Accordingly, a chemical change of the photopolymerization initiator, that is, decomposition or generation of radical, acid, or base is promoted.
Examples of the well-known sensitizing agents that can be used together include benzophenone, thioxanthone, isopropylthioxanthone, anthraquinone, a 3-acylcoumarin derivative, terphenyl, styrylketone, 3-(aroylmethylene) thiazoline, camphorquinone, eosin, rhodamine, and erythrosine.
As the sensitizing agent, a compound represented by Formula (i) disclosed in JP2010-24276A or a compound represented by Formula (I) disclosed in JP1994-107718A (JP-H06-107718A) can be suitably used.
Among these, as the sensitizing agent, in view of suitability to LED light and reactivity with a photopolymerization initiator, benzophenone, thioxanthone, or isopropyl thioxanthone is preferable, thioxanthone or isopropyl thioxanthone is more preferable, and isopropyl thioxanthone is particularly preferable.
In a case where the water dispersion of the present disclosure contains a sensitizing agent, the sensitizing agent contained in the water dispersion may be used singly or two or more kinds thereof may be used.
In a case where the water dispersion of the present disclosure contains a sensitizing agent, since reactivity such as a photopolymerization initiator is enhanced, the sensitizing agent is preferably included in the gel particles.
In a case where the water dispersion of the present disclosure contains a sensitizing agent, the content of the sensitizing agent is preferably 0.1 mass% to 25 mass%, more preferably 0.5 mass% to 20 mass%, and even more preferably 1 mass% to 15 mass% with respect to a total solid content of the gel particles.

(Polymerization inhibitor)

The water dispersion of the present disclosure may contain a polymerization inhibitor.
If the water dispersion of the present disclosure contains a polymerization inhibitor, preservation stability of the water dispersion can be further enhanced.
Examples of the polymerization inhibitor include p-methoxyphenol, quinones (such as hydroquinone, benzoquinone, and methoxybenzoquinone), phenothiazine, catechols, alkylphenols (such as dibutylhydroxytoluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidin-1-oxyl (TEMPOL), cupferron Al, and tris(N-nitroso-N-phenylhydroxylamine) aluminum salt.
Among these, p-methoxyphenol, catechols, quinones, alkylphenols, TEMPO, TEMPOL, cupferron Al, tris(N-nitroso-N-phenylhydroxylamine) aluminum salt, and the like are preferable, and p-methoxyphenol, hydroquinone, benzoquinone, BHT, TEMPO, TEMPOL, cupferron Al, tris(N-nitroso-N-phenylhydroxylamine) aluminum salt, and the like are more preferable.

(Ultraviolet absorbing agent)

The water dispersion of the present disclosure may contain an ultraviolet absorbing agent.
If the water dispersion of the present disclosure contains an ultraviolet absorbing agent, weather fastness of the film can be enhanced.
Examples of the ultraviolet absorbing agent include the well-known ultraviolet absorbing agent, for example, a benzotriazole-based compound, a benzophenone-based compound, a triazine-based compound, and a benzoxazole-based compound.

(Solvent)

The water dispersion of the present disclosure may contain a solvent.
If the water dispersion of the present disclosure contains a solvent, adhesiveness between the film and the base material can be enhanced.
In a case where the water dispersion of the present disclosure contains a solvent, the content of the solvent is preferably 0.1 mass% to 5 mass% with respect to a total amount of the water dispersion.
Specific examples of the solvent are as follows.

- Alcohols (for example, methanol, ethanol, propanol, isopropanol, butanol, isobutanol, secondary butanol, tertiary butanol, pentanol, hexanol, cyclohexanol, and benzyl alcohol),
- Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, and 2-methyl propanediol),
- Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether),
- Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyl diethylenetriamine, and tetramethylpropylenediamine),
- Amides (for example, formamide, N,N-dimethylformamide, and N,N-dimethylacetamide),
- Heterocyclic rings (for example, 2-pyrrolidone, N-methyl-2-pyrrolidone, cyclohexylpyrrolidone, 2-oxazolidone, 1,3-dimethyl-2-imidazolidinone, and $\gamma$-butyrolactone),
- Sulfoxides (for example, dimethylsulfoxide),
- Sulfones (for example, sulfolane), and
- Other (urea, acetonitrile, and acetone)

(Other surfactants)

The water dispersion of the present disclosure may contain another surfactant in addition to the above surfactant (alkyl sulfuric acid salt, alkyl sulfonate, and alkyl benzene sulfonate).
Examples of other surfactants include surfactants disclosed in JP1987-173463A (JP-S62-173463A) and JP1987-183457A (JP-S62-183457A). Examples thereof include nonionic surfactants such as polyoxyethylene alkyl ethers, polyoxyethylene alkyl allyl ethers, acetylene glycols, and polyoxyethylene·polyoxypropylene block copolymers.
As the surfactant, organic fluoro compounds may be used.
The organic fluoro compound is preferably hydrophobic. Examples of the organic fluoro compound include a fluorine-based surfactant, an oily fluorine-based compound (for example, fluorine oil), and a solid-like fluorine compound resin (for example, tetrafluoroethylene resin) and examples thereof include organic fluoro compounds disclosed in JP1982-9053B (JP-S57-9053B) (Sections 8 to 17), JP1987-135826A(JP-S62-135826A).
In view of film properties, adhesiveness, and jettability control, the water dispersion of the present disclosure may contain a polymerization inhibitor, a polymerizable compound, a water soluble resin, and a water-dispersible resin outside the gel particles, if necessary.

Here, the expression "a water dispersion contains a photopolymerization initiator outside the gel particles" means that the water dispersion contains a photopolymerization initiator that is not included in the gel particles. The same is applied to a case of a polymerizable compound, a water soluble resin, a water-dispersible resin, and the like are contained outside the gel particles.

(Photopolymerization initiator that can be contained outside the gel particles)

Examples of the photopolymerization initiator that can be contained outside the gel particles include photopolymerization initiators which are the same as the above photopolymerization initiators (photopolymerization initiator included in the gel particles). As the photopolymerization initiator that can be contained outside the gel particles, a water-soluble or water-dispersible photopolymerization initiator is preferable. In this point of view, preferable examples thereof include DAROCUR (Registered trademark) 1173, IRGACURE (Registered trademark) 2959, IRGACURE (Registered trademark) 754, DAROCUR (Registered trademark) MBF, IRGACURE (Registered trademark) 819DW, IRGACURE (Registered trademark) 500 (above manufactured by BASF SE).

The expression "water solubility" in the photopolymerization initiator that can be contained outside the gel particles refers to properties in which a dissolution amount to 100 g of distilled water at 25°C in a case where drying is performed for two hours at 105°C exceeds 1 g.

The expression "water dispersibility" in the photopolymerization initiator that can be contained outside the gel particles means properties which are water insoluble and dispersed in water. Here, the expression "water insoluble" refers to properties in which a dissolution amount to 100 g of distilled water at 25°C is 1 g or less in a case where the compound is dried at 105°C for two hours.

(Polymerizable compound that can be contained outside the gel particles)

Examples of the polymerizable compound that can be contained outside the gel particles include a compound having an ethylenically unsaturated group and a radical polymerizable compound such as acrylonitrile, styrene, unsaturated polyester, unsaturated polyether, unsaturated polyamide, and unsaturated urethane.

Among these, a compound having an ethylenically unsaturated group is preferable, and a compound having a (meth)acryloyl group is particularly preferable.

As the polymerizable compound that can be contained outside the gel particles, a water-soluble or water-dispersible polymerizable compound is preferable.

The "water solubility" in the polymerizable compound that can be contained outside the gel particles is the same as the above "water solubility" in the "photopolymerization initiator that can be contained outside the gel particles", and the "water dispersibility" in the polymerizable compound that can be contained outside the gel particles is the same as the above "water dispersibility" in the "photopolymerization initiator that can be contained outside the gel particles".

In view of water solubility or water dispersibility, as the polymerizable compound, a compound having at least one selected from an amide structure, a polyethylene glycol structure, a polypropylene glycol structure, a carboxyl group, and a salt of a carboxyl group is preferable.

In view of the water solubility or water dispersibility, as the polymerizable compound that can be contained outside the gel particles, for example, at least one selected from (meth)acrylic acid, sodium (meth)acrylate, potassium (meth)acrylate, N,N-dimethylacrylamide, N,N-diethylacrylamide, morpholine acrylamide, N-2-hydroxyethyl (meth)acrylamide, N-vinyl pyrrolidone, N-vinyl caprolactam, 2-hydroxyethyl (meth)acrylate, 3-hydroxypropyl (meth)acrylate, 2-hydroxypropyl (meth)acrylate, glycerin monomethacrylate, N-[tris(3-acryloylaminopropyloxymethylene)methyl]acrylamide, diethylene glycol bis(3-acryloylaminopropyl) ether, polyethylene glycol di(meth)acrylate, or polypropylene glycol di(meth)acrylate is preferable, and at least one selected from (meth)acrylic acid, N,N-dimethylacrylamide, N-2-hydroxyethyl (meth)acrylamide, 2-hydroxyethyl (meth)acrylate, glycerin monomethacrylate, N- [tris(3 -acryloylaminopropyloxymethylene)methyl] acrylamide, diethylene glycol bis(3-acryloylaminopropyl) ether, polyethylene glycol di(meth)acrylate, or polypropylene glycol di(meth)acrylate is more preferable.

(Water soluble resin or water-dispersible resin that can be contained outside the gel particles)

The structures of the water soluble resin or the water-dispersible resin that can be contained outside the gel particles are not particularly limited, and may be any structures.

Examples of the water soluble resin or the water-dispersible resin that can be contained outside the gel particles include a chain-shaped structure, a ramified (branched) structure, a star-shaped structure, a crosslinked structure, and a mesh-shaped structure.

The expression "water soluble" in the water soluble resin that can be contained outside the gel particles has the same meaning as that of the expression "water soluble" in the "photopolymerization initiator that can be contained

outside the gel particles", and the expression "water dispersibility" in the water-dispersible resin that can be contained outside the gel particles has the same meaning as that of the expression "water dispersibility" in the "photopolymerization initiator that can be contained outside the gel particles".

As the water soluble resin or water-dispersible resin, a resin that is dissolved by 0.1 g or greater with respect to 100 g of the distilled water is preferable, a resin that is dissolved by 0.2 g or greater is more preferable, and a resin that is dissolved by 0.5 g or greater is particularly preferable.

As the water soluble resin or the water-dispersible resin, a resin having a functional group selected from a carboxyl group, a salt of a carboxy group, a sulfo group, a salt of a sulfo group, a sulfuric acid group, a salt of a sulfuric acid group, a phosphonic acid group, a salt of a phosphonic acid group, a phosphoric acid group, a salt of a phosphoric acid group, an ammonium base, a hydroxyl group, a carboxylic acid amide group, and an alkyleneoxy group is preferable.

As the counter cation of the salt, an alkali metal cation such as sodium and potassium, an alkali earth metal cation such as calcium and magnesium, an ammonium cation, or a phosphonium cation is preferable, an alkali metal cation is particularly preferable.

As an alkyl group included in an ammonium group of an ammonium base, a methyl group or an ethyl group is preferable.

As the counter anion of the ammonium base, a halogen anion such as chlorine and bromine, a sulfate anion, a nitrate anion, a phosphate anion, a sulfonate anion, a carboxylate anion, or a carbonate anion is preferable, and a halogen anion, a sulfonate anion, or a carbonate anion is particularly preferable.

As a substituent on the nitrogen atom of the carboxylic acid amide group, an alkyl group having 8 or less carbon atoms is preferable, and an alkyl group having 6 or less carbon atoms is particularly preferable.

The resin having an alkyleneoxy group preferably has an alkyleneoxy chain consisting of repetition of an alkyleneoxy group. The number of the alkyleneoxy groups included in the alkyleneoxy chain is preferably 2 or greater and particularly preferably 4 or greater.

<Preferable physical properties of water dispersion >

In a case where the water dispersion is at 25°C to 50°C, the viscosity of the water dispersion of the present disclosure is preferably 3 mPa·s to 15 mPa·s and more preferably 3 mPa·s to 13 mPa·s. Particularly, as the water dispersion of the present disclosure, the water dispersion of which viscosity at 25°C is 50 mPa·s or less is preferable. If the viscosity of the water dispersion is in the above range, high jetting stability can be realized. in a case where the water dispersion is applied to ink jet recording.

The viscosity of the ink composition is obtained by using a viscometer: VISCOMETER TV-22 (manufactured by Toki Sangyo Co., Ltd.).

The method of producing the water dispersion of the present disclosure is not particularly limited, as long as the method is a method that can cause gel particles having a three-dimensional crosslinked structure including a thioether bond and an ethylenic double bond, having a hydrophilic group, and including a photopolymerization initiator to be dispersed in water.

In view of easiness for obtaining the water dispersion of the present disclosure, the method of producing the water dispersion of the present disclosure is preferably a method of producing a water dispersion of gel particles according to the following embodiment.

[Method of producing water dispersion of gel particles]

A method (hereinafter, also referred to as a "producing method of the embodiment") of producing a water dispersion of the gel particles according to the embodiment has an emulsification step in which an oil phase component which includes the polyfunctional vinyl monomer compound, the polyfunctional thiol compound, the photopolymerization initiator, and an organic solvent, and in which a ratio of the number of SH groups to the C=C number is 0.20 or greater and less than 1.00 and a water phase component which includes water are mixed and emulsified so as to obtain an emulsion and in which at least one of the oil phase component and the water phase component includes an organic compound having the hydrophilic group, and

a gelation step of causing the polyfunctional vinyl monomer compound and the polyfunctional thiol compound to react with each other by heating the obtained emulsion, so as to obtain the water dispersion of gel particles.

If necessary, the producing method of the embodiment may have other steps.

According to the producing method of the embodiment, the water dispersion of the present disclosure described above can be easily produced.

The above C=C number is the number of ethylenic double bonds (C=C) included in the total amount of the polyfunctional vinyl monomer compound in the oil phase component.

The above number of SH groups is the number of thiol groups (SH groups) included in the total amount of the

polyfunctional thiol compound in the oil phase component.

If the ratio [the number of SH groups/C=C number] is 0.20 or greater, as described above, the three-dimensional crosslinked structure (that is, gel particles) is effectively formed, and thus flexibility of the formed film, redispersibility of the water dispersion, and the like are enhanced. Since cure shrinkage caused by an excessively great C=C number is suppressed, it is advantageous in view of adhesiveness with the base material of the formed film.

Meanwhile, if the ratio [the number of SH groups/C=C number] is less than 1.00, an ethylenic double bond (C=C) as a portion of the (meth)acryloyl group in the three-dimensional crosslinked structure remains, and thus hardness of the formed film is enhanced.

In this point of view, a ratio [the number of SH groups/C=C number] in the oil phase component is preferably 0.30 to 0.80.

In the producing method of the embodiment, an amount of the organic compound including a hydrophilic group is preferably 5 mass% to 20 mass% with respect to the total amount (hereinafter, referred to as a "total solid content") obtained by excluding the organic solvent and water from the oil phase component and the water phase component.

If the amount of the organic compound including the hydrophilic group is 5 mass% or greater, dispersibility, redispersibility, and preservation stability are further enhanced.

If the amount of the organic compound including the hydrophilic group is 20 mass% or less, the hardness of the formed film is further enhanced.

In this specification, the total amount (total solid content) excluding an organic solvent and water from the water phase component and the oil phase component corresponds to the total solid content of the produced gel particles.

In the producing method of the embodiment, the total amount of the polyfunctional vinyl monomer compound and the polyfunctional thiol compound is preferably 50 mass% to 95 mass%, more preferably 60 mass% to 90 mass%, and particularly preferably 70 mass% to 90 mass% with respect to the total amount (total solid content) excluding an organic solvent and water from the water phase component and the oil phase component.

If the total amount is 50 mass% or greater, the three-dimensional crosslinked structure is easily formed.

If the content is 95 mass% or less, the content of the photopolymerization initiator and the like can be easily secured.

In the producing method of the embodiment, preferable ranges of the polyfunctional vinyl monomer compound, the polyfunctional thiol compound, the photopolymerization initiator, and the organic compound having a hydrophilic group are as described above.

Examples of the organic solvent included in the oil phase component include ethyl acetate, methyl ethyl ketone, and acetone.

<Emulsification step>

The emulsification step is a step of obtaining an emulsion by mixing and emulsifying an oil phase component and a water phase component.

In the emulsification step, in the respective stages of preparing an oil phase component and a water phase component, an organic compound (hereinafter, also referred to as a "hydrophilic group-containing compound") having a hydrophilic group can be caused to be contained in at least one of the oil phase component and the water phase component.

That is, the hydrophilic group-containing compound may be caused to be contained only in the oil phase component, may be caused to be contained only in the water phase component, or may be caused to be contained in both of the oil phase component and the water phase component.

Specific examples of the hydrophilic group-containing compound are as described above as the specific examples of the "organic compound including a hydrophilic group".

The hydrophilic group-containing compound used in the embodiment may be used singly or two or more kinds thereof may be used.

A first hydrophilic group-containing compound may be caused to be contained in an oil phase component and a second hydrophilic group-containing compound different from the first hydrophilic group-containing compound may be caused to be contained in a water phase component.

Each of the first hydrophilic group-containing compound and the second hydrophilic group-containing compound may be used singly or two or more kinds thereof may be used.

The oil phase component may include a catalyst.

If the oil phase component includes a catalyst, reaction in the gelation step can more effectively progress.

Examples of the catalyst include triethylamine, diisopropylethylamine, 1,4-diazabicyclo[2.2.2]octane, dimethylbenzylamine, bis(dimethylaminoethyl) ether, N,N-dimethylethanolamine, triethylenediamine, N,N-dimethylcyclohexylamine, pentamethyl diethylenetriamine, N,N,N',N',N"-pentamethyldipropylenetriamine, N-ethylmorpholine, N-methylmorpholine, diaminoethoxyethanol, trimethylaminoethylethanolamine, dimethylaminopropylamine, dimorpholinodimethyl ether, and 1,3,5-tris(3 -(dimethylamino)propyl)-hexahydro-2-triazine.

In a case where the oil phase component includes an organic compound having a carboxyl group, a sulfo group, a sulfuric acid group, a phosphonic acid group, or a phosphoric acid group, as an organic compound having a hydrophilic group, the water phase component may include a neutralizing agent. In this case, if the oil phase component and the water phase component are mixed, a carboxyl group, a sulfo group, a sulfuric acid group, a phosphonic acid group, or a phosphoric acid group is neutralized, a salt of a carboxyl group, a salt of a sulfo group, a salt of a sulfuric acid group, a salt of a phosphonic acid group, or a salt of a phosphoric acid group is formed. These salts also function as hydrophilic groups of the gel particles. These salts are particularly excellent in the effect of causing the gel particles to be dispersed in water.

Examples of the neutralizing agent include sodium hydroxide and potassium hydroxide.

The mixture of the oil phase component and the water phase component, and emulsification of the mixture obtained by the mixture can be performed by well-known methods.

The emulsification can be performed by a disperser such as a homogenizer.

The rotation speed in the emulsification may be 5,000 rpm to 20,000 rpm and is preferably 10,000 rpm to 15,000 rpm.

The rotation time in the emulsification may be 1 minute to 120 minutes, preferably 3 minutes to 60 minutes, more preferably 3 minutes to 30 minutes, and particularly preferably 5 minutes to 15 minutes.

<Gelation step>

The gelation step is a step of obtaining a water dispersion of the gel particles by heating the emulsion and causing the polyfunctional vinyl monomer compound and the polyfunctional thiol compound to react with each other (preferably by forming a thioether bond).

The details of the reaction are as described above.

The heating temperature (reaction temperature) of the emulsion in the gelation step is preferably 35°C to 70°C and more preferably 40°C to 60°C.

The heating time (reaction time) in the gelation step is preferably 6 hours to 50 hours, more preferably 12 hours to 40 hours, and particularly preferably 15 hours to 35 hours.

The gelation step preferably includes a stage of distilling an organic solvent from an emulsion.

The gelation step can include a stage of adding a catalyst to an emulsion. Examples of the catalyst are as described above.

The producing method of the embodiment may have other steps in addition to the emulsification step, and the gelation step, if necessary.

Examples of the other step include a step of adding the other components such as a colorant to the water dispersion of the gel particles obtained in the gelation step.

The other added components are as described above as the other components that can contain the water dispersion.

<Image forming method>

The image forming method of the present disclosure has an application step of using the water dispersion of the present disclosure as ink and applying a water dispersion as ink on a recording medium and an irradiation step of irradiating the water dispersion applied on the recording medium with the active energy rays.

If these steps are performed, an image having excellent flexibility and excellent hardness is formed on the recording medium. This image has excellent adhesiveness, excellent fixing properties, excellent water resistance, and excellent solvent resistance.

As the recording medium, the above base material (plastic base material and the like) can be used.

(Application step)

The application step is a step of applying the water dispersion of the present disclosure on the recording medium.

As an aspect of applying the water dispersion to the recording medium, an aspect of applying the water dispersion by an ink jet method is preferable.

The application of the water dispersion by an ink jet method can be performed by using the well-known ink jet recording devices.

An ink jet recording device is not particularly limited, a well-known ink jet recording device that can achieve the desired resolution can be arbitrarily selected to be used.

That is, any one of the well-known ink jet recording devices including a commercially available product can

discharge the water dispersion to a recording medium by the image forming method of the present disclosure.

Examples of the ink jet recording device include devices including an ink supplying method, a temperature sensor, and heating means.

Examples of the ink supplying method include an original tank including the water dispersion of the present disclosure, a supply piping, an ink supply tank just before an ink jet head, a filter, and a piezo-type ink jet head. The piezo-type ink jet head can be driven so as to eject multi-sized dots of preferably 1 pl to 100 pl and more preferably 8 pl to 30 pl at a resolution of preferably 320 dpi×320 dpi to 4,000 dpi×4,000 dpi (dot per inch), more preferably 400 dpi×400 dpi to 1,600 dpi×1,600 dpi, and even more preferably 720 dpi×720 dpi. The dpi (dot per inch) according to the present disclosure represents the number of dots per 2.54 cm (1 inch).

(Irradiation step)

The irradiation step is a step of irradiating the water dispersion applied to the recording medium with the active energy rays.

If the water dispersion applied to the recording medium is irradiated with active energy rays, the crosslinking reaction of the gel particles in the water dispersion proceeds, the image is fixed, and the film hardness of the image can be improved.

Examples of the active energy rays that can be used in the irradiation step include ultraviolet rays (hereinafter, also referred to as UV light), and visible rays, electron beams. Among these, UV light are preferable.

The peak wavelength of the active energy rays (light) is preferably 200 nm to 405 nm, more preferably 220 nm to 390 nm, even more preferably 220 nm to 385 nm, and still even more preferably 220 nm to 350 nm.

The peak wavelength is preferably 200 nm to 310 nm and more preferably 200 nm to 280 nm.

For example, the exposure surface illuminance at the time of irradiation with the active energy rays (light) may be 10 $mW/cm^2$ to 2,000 $mW/cm^2$ and is preferably 20 $mW/cm^2$ to 1,000 $mW/cm^2$.

As the light source for generating the active energy rays (light), a mercury lamp, a metal halide lamp, a UV fluorescent lamp, a gas laser, a solid-state laser, and the like are widely known.

The replacement of the light sources exemplified above into a semiconductor ultraviolet light emitting device is industrially and environmentally useful.

Among these, among semiconductor ultraviolet light emitting devices, light emitting diode (LED) and a laser diode (LD) are compact, has a long lifetime, high efficiency, and low cost, and is expected as a light source.

As the light source, a metal halide lamp, an extra high pressure mercury lamp, a high pressure mercury lamp, a medium pressure mercury lamp, a low pressure mercury lamp, LED, and a blue-violet laser are preferable.

Among these, an extra high pressure mercury lamp that can perform irradiation with light at a wavelength of 365 nm, 405 nm, or 436 nm, a high pressure mercury lamp that can perform irradiation with light at a wavelength of 365 nm, 405 nm, or 436 nm, LED that can perform irradiation with light at a wavelength of 355 nm, 365 nm, 385 nm, and 395 nm, or 405 nm is more preferable, and LED that can perform irradiation with light at a wavelength of 355 nm, 365 nm, 385 nm, 395 nm, or 405 nm is most preferable.

In the irradiation step, the irradiation time of the water dispersion applied on the recording medium with the active energy rays may be 0.01 seconds to 120 seconds and preferably 0.1 seconds to 90 seconds.

With respect to the irradiation condition of the active energy rays and basic irradiation method, conditions disclosed in JP1985-132767A (JP-S60-132767A) can be suitably referred to.

Specifically, a method of scanning the head unit and the light sources by a method of applying a heat unit and a light source by a so-called shuttle method of providing the light sources on both sides of the head unit including the ink ejection device and a method of performing irradiation with active energy rays by a separate light source without driving are preferable.

The irradiation with the active energy rays is preferably performed for a certain period of time (for example, for 0.01 seconds to 120 seconds and preferably for 0.01 seconds to 60 seconds) after water dispersion is landed and dried by heating.

(Heating and drying step)

If necessary, the image forming method of the present disclosure may have a heating and drying step of heating and drying the water dispersion on the recording medium before the irradiation step and after the application step.

The heating means for performing heating and drying is not particularly limited. However, examples of the heating means include a heat drum, hot air, an infrared lamp, a heat oven, and a heat plate.

The heating temperature is preferably 40°C or higher, more preferably 40°C to 150°C, and even more preferably 40°C to 80°C.

The heating time can be appropriately set by adding the composition of the water dispersion, the printing speed,

and the like.

## Examples

Hereinafter, the invention is specifically described with reference to the specific examples.
Unless described otherwise, a "part" mans a part by mass.

[Example 1]

<Manufacturing of water dispersion>

(Emulsification step)

-Manufacturing of oil phase component-

1.4 g of acrylic acid as an organic compound having a hydrophilic group (carboxyl group), 2.98 g of pentaerythritol tetrakis(3-mercaptopropionate (PEMP; manufactured by SC Organic Chemical Co., Ltd.) as a polyfunctional thiol compound, 0.1 g of triethylamine as a catalyst, and 5 g of ethyl acetate as an organic solvent are mixed, and the obtained mixture was heated at 50°C for 4 hours.
Subsequently, the mixture was cooled to room temperature, 12.48 g of SR-399E (Dipentaerythritol pentaacrylate; manufactured by Sartomer) as a polyfunctional vinyl monomer compound, 1.07 g of IRGACURE (Registered trademark) 819 (bis(2,4,6-trimethylbenzoyl)-phenylphosphine oxide; manufactured by BASF SE) as a photopolymerization initiator, 0.005 g of dibutylhydroxytoluene (BHT) as a polymerization inhibitor, and 14.2 g of ethyl acetate as an organic solvent were added to the mixture after the cooling and were dissolved, so as to obtain an oil phase component.
In this oil phase component, a ratio [the number of SH groups/C=C number] between the number (C=C number) of ethylenic double bonds included in the total amount of the polyfunctional vinyl monomer compound (SR-399E) and the number (the number of SH groups) of the thiol groups included in the total amount of the polyfunctional thiol compound (PEMP) is provided in Table 1.
In Tables 1 and 2, the ratio [the number of SH groups/C=C number] is presented as a "ratio [SH/C=C]".

-Manufacturing of water phase component-

0.42 g of sodium dodecyl sulfate as an organic compound having a hydrophilic group (sodium salt of a sulfuric acid group) and 0.622 g of sodium hydroxide as a neutralizing agent were dissolved in 40 g of distilled water, so as to obtain a water phase component.
The water phase component and the oil phase component were mixed, and the obtained mixture was emulsified at 12,000 rpm for 10 minutes by using a homogenizer, so as to obtain an emulsion.

(Gelation step)

SR-399E and PEMP were reacted with each other by heating the emulsion, so as to obtain the water dispersion of the gel particles. Specific operations are provided below.
20 g of distilled water was added to the emulsion, and subsequently, heating was performed at 40°C for 4 hours under stirring, so as to distill ethyl acetate from the emulsion. 0.1 g of triethylamine as a catalyst was further added to the obtained liquid, the temperature of the liquid was increased to 50°C, the liquid was stirred at 50°C for 24 hours, so as to form the particles in the liquid. The liquid including the particles was diluted with distilled water such that the solid content (the content of the particles in this example) was 20 mass%, so as to obtain a water dispersion of the particles.

<Determination of gelling>

Whether the particles in the water dispersion were gelled (that is, whether the particles in the water dispersion liquid were gel particles) was checked by the following method.
The following operations were performed in the conditions of the liquid temperature of 25°C.
Samples were gathered from the water dispersion. 100 times by mass of tetrahydrofuran (THF) with respect to a total solid content (particles in this example) in this sample was added to and mixed with the gathered samples, so as to prepare a diluent of the water dispersion. Centrifugation in conditions of 80,000 rpm and 40 minutes was performed on the obtained diluent. After the centrifugation, whether residues exist was visually checked. In a case where the residues were checked, the residues were redispersed in water by adding water to this residue and performing stirring

for one hour by using a stirrer so as to obtain a redispersion liquid. Particle size distribution of the obtained redispersion liquid was measured by the light scattering method, by using a wet-type particle size distribution measuring device (LA-910, manufactured by Horiba Ltd.).

Based on the results of the operations below, according to the following determination standard, whether the particles were gelled (that is, whether the particles were gel particles) was determined.

The results are provided in Table 1.

-Determination standard of gelling-

Y: Residues were checked after centrifugation, and particle size distribution with respect to redispersion liquid was checked, and it was checked that particles were gelled (that is, the particles were gel particles).

N: Residues were not checked after centrifugation or particle size distribution with respect to redispersion liquid was not checked in a redispersion liquid of residues even if residues were checked, and it was checked that particles were gelled (that is, particles were gel particles).

<Checking of degree of crosslinking>

With respect to the particles in the water dispersion, a degree of crosslinking (degree of gelling) was checked.

The greater degree of crosslinking means a higher degree of gelling.

The following operations were performed in the condition of the liquid temperature of 25°C.

First, 7 g of dimethylsulfoxide (DMSO) was added to 1 g of the water dispersion (20 mass% of the solid content), and stirring was performed for 30 minutes, so as to prepare a dimethylsulfoxide (DMSO) solution of the gel particles. The turbidity of the prepared DMSO solution was measured by using a quartz cell of 10 mm with an integrating spherical turbidity meter ("SEP-PT-706D" manufactured by Mitsubishi Chemical Corporation).

A degree of crosslinking (degree of gelling) was determined based on the measurement result of the turbidity according to the following standards.

The results are provided in Table 1.

-Evaluation standard of degree of crosslinking-

A: Turbidity of a DMSO solution was 5 ppm or greater, and a degree of crosslinking (degree of gelling) was highest.
B: Turbidity of a DMSO solution was 3 ppm or greater and less than 5 ppm.
C: Turbidity of a DMSO solution was 1 ppm or greater and less than 3 ppm.
D: Turbidity of a DMSO solution was less than 1 ppm.

<Checking of inclusion of photopolymerization initiator>

With respect to the water dispersion, an inclusion ratio (%) of the photopolymerization initiator was measured so as to check whether the photopolymerization initiators were included in particles. Details thereof are described below. The following operations were performed in the condition of the liquid temperature of 25°C.

Two samples in the same mass (hereinafter, referred to as "Sample 1A" and "Sample 2A") were gathered from the water dispersion.

100 times by mass of tetrahydrofuran (THF) of the total solid content in Sample 1A was added to and mixed with Sample 1A, so as to prepare the diluent. Centrifugation in the condition of 80,000 rpm and 40 minutes was performed on the obtained diluent. The supernatant (hereinafter, referred to as "Supernatant 1A") generated by the centrifugation was gathered. The mass of the photopolymerization initiator included in Supernatant 1A gathered was measured by a liquid chromatography device "Waters2695" manufactured by Waters Corporation. The mass of the obtained photopolymerization initiator was set as "the total amount of the photopolymerization initiator".

Centrifugation was performed on Sample 2A in the same condition as in the centrifugation performed on the diluent. A supernatant (hereinafter, referred to as "Supernatant 2A") generated by the centrifugation was gathered. The mass of the photopolymerization initiator included in Supernatant 2A gathered was measured by the liquid chromatography device. The mass of the obtained photopolymerization initiator was "a liberation amount of the photopolymerization initiator".

An inclusion ratio (mass%) of the photopolymerization initiator was obtained by the following equation based on the "total amount of the photopolymerization initiator" and the "liberation amount of the photopolymerization initiator".

$$\text{Inclusion ratio (mass\%) of photopolymerization initiator} = ((\text{Total amount of photopolymerization initiator} - \text{liberation amount of photopolymerization initiator})/\text{total amount of photopolymerization initiator}) \times 100$$

Based on the measured inclusion ratio (%), according to the following determination standard, whether the photopolymerization initiator was included was determined.

-Determination standard of whether photopolymerization initiator was included-

Y1: An inclusion ratio was 95 mass% or greater, a photopolymerization initiator was included in particles.
Y2: An inclusion ratio was greater than 0 mass% and less than 95 mass%, and a photopolymerization initiator was included in particles.
N: An inclusion ratio was 0 mass%, and a photopolymerization initiator was not included in particles.

<Measuring of volume-average particle diameter of gel particles>

The volume-average particle diameter (hereinafter, simply referred to as a "particle diameter") of the gel particles in the obtained water dispersion can be measured by a light scattering method by using LA-910 (manufactured by Horiba Ltd.).
The results are provided in Table 1.

<Manufacturing of ink composition>

The following components were mixed, so as to manufacture an ink composition.
The obtained ink composition was also an aspect of the water dispersion of the gel particles.

-Component of ink composition-

- The above water dispersion ... 82 parts
- Pigment dispersion liquid (Pro-jet Cyan APD1000 (Registered trademark) (manufactured by FUJIFILM Imaging Colorants Inc.) ... 13 parts
- Fluorine-based surfactant (manufactured by DuPont, Zonyl FS300) ... 0.7 parts
- 2-Methylpropanediol... 4.3 parts

<Evaluation>

The ink composition which was an aspect of the water dispersion of the gel particles was used so as to perform the following evaluation.
The results are provided in Table 1.

(Adhesiveness of cured film (Cross hatch test))

The adhesiveness was evaluated by using each of the evaluation samples (PVC), the evaluation samples (PET), and the evaluation samples (acryl).
An evaluation sample (PVC) was manufactured by coating a polyvinyl chloride (PVC) sheet as a base material with the ink composition obtained above in a thickness of 12 μm by using bar No. 2 of K hand coater manufactured by RK PRINT COAT INSTRUMENTS Ltd. and heating and drying the obtained coated film at 60°C for three minutes.
The evaluation sample (PET) was manufactured in the same manner as the manufacturing of the evaluation sample (PVC) except for changing the base material to a polyethylene terephthalate (PET) sheet.
The evaluation sample (acryl) was manufactured in the same manner as the manufacturing of the evaluation sample (PVC) except for changing the base material to an acrylic resin sheet.
Here, the following sheets were used for each of the PVC sheet, the PET sheet, and the acrylic resin sheet.

PVC sheet ... vinyl chloride sheet "AVERY (Registered trademark) 400 GLOSS WHITE PERMANENT" manufactured by Avery Dennison Corporation
PET sheet ... polyethylene terephthalate sheet manufactured by Robert Horne Direct
Acrylic resin sheet... acrylic resin sheet manufactured by JSP Corporation

In the evaluation of the adhesiveness, a UV mini conveyor device for a test CSOT (manufactured by GS Yuasa International Ltd.) to which an ozonelessmetal halide lamp MAN250L was mounted as an exposure device and in which a conveyor speed was set as 9.0 m/min and exposure intensity was set as 2.0 W/cm$^2$ was used.
With respect to the coated film of each evaluation sample, the coated film was cured by irradiating the coated film with the UV light (ultraviolet rays) using the exposure device, so as to obtain a cured film.
A cross hatch test was performed on the cured film in conformity with ISO2409 (cross cut method) and the cured film was evaluated according to the following evaluation standard.
In this cross hatch test, cut intervals were set to 1 mm, and 25 square lattices having angles of 1 mm were formed.
According to the following evaluation standard, 0 and 1 are levels that are acceptable in practice.
According to the evaluation standard, a proportion (%) in which a lattice was peeled off was a value obtained by the following equation. The total number of the lattices according to the following equation was 25.
Ratio of peeled lattice (%)=[(the number of lattices in which peeling was generated)/(the total number of lattices)]×100

-Evaluation standard of adhesiveness of cured film-

0: A proportion (%) in which a lattice was peeled off was 0%.
1: A proportion (%) in which a lattice was peeled off was greater than 0% and 5% or less.
2: A proportion (%) in which a lattice was peeled off was greater than 5% and 15% or less.
3: A proportion (%) in which a lattice was peeled off was greater than 15% and 35% or less.
4: A proportion (%) in which a lattice was peeled off was greater than 35% and 65% or less.
5: A proportion (%) in which a lattice was peeled off was greater than 65%.

(Flexibility of cured film)

The flexibility of the cured film was evaluated by using the evaluation sample (PET).
In the same manner as the evaluation of the adhesiveness of the cured film, the coated film of the evaluation sample (PET) was irradiated with UV light and was cured, so as to obtain a cured film.
Subsequently, the evaluation sample (PET) was folded by hands at an angle of about 45° such that a surface on which the cured film was formed became a convex side and subsequently was folded by hands at an angle of about 45° such that the surface on which the cured film was formed became a concave side (hereinafter, this operation is referred to as a "folding operation"). This folding operation was performed 500 times.
In the course of performing the folding operation 500 times, the state of the cured film was visually observed, and flexibility of the cured film was evaluated according to the following evaluation standards.

-Evaluation standard of flexibility of cured film-

A: Even if a folding operation was performed 500 times, cracking of a coated film was not generated.
B: Cracking of a coated film was generated while a folding operation was performed greater than 300 times and 500 times or less.
C: Cracking of a coated film was generated while a folding operation was performed greater than 200 times and 300 times or less.
D: Cracking of a coated film was generated while a folding operation was performed greater than 100 times and 200 times or less.
E: Cracking of a coated film was generated while a folding operation was performed 100 times or less.

(Pencil hardness of cured film)

Pencil hardness of the cured film was evaluated by using the above evaluation sample (PVC).

In the same manner as the evaluation of the adhesiveness of the cured film, the coated film of the evaluation sample (PVC) was irradiated with UV light and was cured, so as to obtain a cured film.

A pencil hardness test was performed on an cured film in conformity with JIS K5600-5-4 (1999) by using UNI (Registered trademark) manufactured by Mitsubishi Pencil Co., Ltd. as a pencil.

According to the test results, an allowable range of the hardness is HB or harder and preferably H or harder. A printed matter having the evaluation result of B or less is not preferable, since there is a possibility that scratches may be generated at the time of handling the printed matter.

(Water resistance of cured film)

Water resistance of the cured film was evaluated by using an evaluation sample (PVC).

A coated film of the evaluation sample (PVC) 400 was exposed and cured in the condition of energies of 8,000 $mJ/cm^2$ by a Deep UV lamp (manufactured by Ushio Inc., SP-7), so as to obtain a cured film.

The surface of the obtained cured film was rubbed with a swab impregnated with water, the obtained cured film was visually observed in the course of the rubbing, and water resistance of the cured film was evaluated according to the following evaluation standard.

-Evaluation standard of water resistance of cured film-

A: Even if the rubbing was performed 10 or more times, no change in a cured film was acknowledged.
B: Concentration of a cured film was decreased by rubbing of five times to nine times.
C: Concentration of a cured film was decreased by rubbing of two times to four times.
D: Concentration of a cured film was remarkably decreased by rubbing of one time.

(Solvent resistance of cured film)

In the evaluation of the water resistance of the cured film, solvent resistance of the cured film was evaluated in the same manner as the evaluation of the water resistance of the cured film except for changing the cotton swab impregnated with water to a cotton swab impregnated with isopropyl alcohol.

An evaluation standard of solvent resistance of a cured film is exactly the same as the evaluation standard of the water resistance of the cured film, and thus description thereof is omitted.

(Fixing properties of ink composition)

Fixing properties of an ink composition were evaluated by using an evaluation sample (PVC).

The coated film of the evaluation sample (PVC) was exposed in the condition of energies of 1,000 $mJ/cm^2$ by a Deep UV lamp (manufactured by Ushio Inc., SP-7). A fixation degree on the surface of the coated film after exposure was evaluated by touch. In a case where stickiness remained, exposure was repeated until the stickiness was removed, and the fixing properties of the ink composition were evaluated according to the following evaluation standard based on an exposure amount until the stickiness was removed.

-Evaluation standard of fixing properties of ink composition-

A: Stickiness was removed by exposure of one time.
B: Stickiness was removed by exposure of two to three times.
C: Stickiness was removed by exposure of four to five times.
D: Stickiness was not removed by exposure of six or more times.

(Jettability of ink composition)

The above obtained ink composition was ejected from the head of an ink jet printer (manufactured by Roland DG Corporation, SP-300V) for 30 minutes and then the ejection was stopped.

After five minutes had elapsed from the stop of the ejection, the ink composition was ejected to the polyvinyl chloride (PVC) sheet described above from the head, so as to form a solid image of 5 cm×5 cm.

These images were visually observed so as to check existence of dot losses due to the generation of the non-ejection nozzles, and jettability of the ink composition was evaluated according to the following evaluation standard.
In the above evaluation standard, the ink composition having the best jettability was A.

-Evaluation standard of jettability-

A: Dot losses were not acknowledged due to the generation of the non-ejection nozzles, and an image with a satisfactory quality was able to be obtained.
B: Some dot losses due to the generation of the non-ejection nozzles were acknowledged, but no troubles were generated in practice.
C: Dot losses due to the generation of the non-ejection nozzles were generated, but an image was unsatisfactory in practice.
D: Ejection from heads was not able to be performed.

(Redispersibility of ink composition)

The following operation was performed under a yellow lamp so as to evaluate redispersibility of an ink composition.
An aluminum plate was coated with the ink composition in a thickness of 12 μm by using bar No. 2 of K hand coater manufactured by RK PRINT COAT INSTRUMENTS Ltd, so as to form a coated film. The obtained coated film was heated at 60°C for 3 minutes and was dried. The surface of the coated film after being dried was rubbed with a sponge impregnated with water.
Fourier transform infrared spectroscopy (FT-IR) was performed on each of the coated films before being rubbed with a sponge and the coated film after being rubbed. A residual ratio of gel particles was calculated according to the following equation from obtained results.
Residual ratio of gel particles=(Intensity of peak derived from gel particles in coated film after being rubbed with sponge/Intensity of peak derived from gel particles in coated film before being rubbed with sponge)×100
Here, a peak derived from gel particles means a peak derived from a thioether bond.

-Evaluation standard of redispersibility of ink composition-

A: A residual ratio of the gel particles was 1% or less, and redispersibility was excellent.
B: A residual ratio of the gel particles was greater than 1% and 5% or less, and redispersibility was in a range acceptable in practice.
C: A residual ratio of the gel particles was greater than 5% and 10% or less, and redispersibility was out of a range acceptable in practice.
D: A residual ratio of the gel particles was greater than 10%, and redispersibility was extremely bad.

(Preservation stability of ink composition)

The ink composition was sealed in a container, two weeks had elapsed at 60°C, the same evaluation as the jettability evaluation was performed, and preservation stability of the ink composition was evaluated according to the same evaluation standard.
According to the evaluation standard, an ink composition having the best preservation stability was A.

[Examples 2 to 4, 6 to 10, 24, and 25]

The same operations as Example 1 were performed except for changing kinds of the photopolymerization initiator, amounts of the photopolymerization initiator, kinds of the polyfunctional vinyl monomer compound, kinds of the polyfunctional thiol compound, and a combination of the ratio [the number of SH groups/C=C number] as presented in Table 1, in Example 1.
In these examples, the ratio [the number of SH groups/C=C number] was changed not by changing the total amount of the polyfunctional vinyl monomer compound and the polyfunctional thiol compound in Example 1 but by changing the amount ratio of the both.

Results are provided in Table 1.

[Example 5]

The same operation was performed in the same manner as in Example 1 except for further adding 0.3 g of 2-isopropylthioxanthone (ITX) as a sensitizing agent, in addition to the photopolymerization initiator in the stage of manufacturing the oil phase component in Example 1.
The results are provided in Table 1.

[Examples 11 to 21]

The operation which is the same as in Example 1 was performed except for

changing kinds of the polyfunctional vinyl monomer compound, kinds of the polyfunctional thiol compound, and a combination of the ratio [the number of SH groups/C=C number], as presented in Table 1,
changing 1.4 g of acrylic acid used in the manufacturing of the oil phase component to 1.4 g of BLEMMER (Registered trademark) PME4000 (manufactured by NOF Corporation; methoxy polyethylene glycol monomethacrylate (the number of repetition of an ethyleneoxy group in one molecule was 90)) as an organic compound having a hydrophilic group (an ethyleneoxy group),
not causing the water phase component to contain sodium hydroxide, and
changing an amount of triethylamine added in the gelation step from 0.1 g to 0.15 g, in Example 1.

Even in these examples, the ratio [the number of SH groups/C=C number] was changed not by changing the total amount of the polyfunctional vinyl monomer compound and the polyfunctional thiol compound in Example 1 but by changing the amount ratio of the both.
Results are provided in Table 1.

[Examples 22 and 23]

The operation which is the same as in Example 1 was performed except for

changing a ratio [the number of SH groups/C=C number] as presented in Table 1,
changing 1.4 g of acrylic acid used in the manufacturing of the oil phase component to 1.4 g of 2-acrylamido-2-methylpropanesulfonic acid (AMPS) as an organic compound having a hydrophilic group (sulfo group), and
changing an amount of sodium hydroxide used in the manufacturing of the water phase component from 0.622 g to 0.27 g in Example 1.

In these examples, the ratio [the number of SH groups/C=C number] was changed not by changing the total amount of the polyfunctional vinyl monomer compound and the polyfunctional thiol compound in Example 1 but by changing the amount ratio of the both.
Results are provided in Table 1.

[Example 26]

The operation which is the same as in Example 1 was performed except for changing particle diameters of the gel particles by changing the condition of emulsification by a homogenizer in Example 1 to 8,000 rpm for 10 minutes.
Results are provided in Table 1.

[Comparative Example 1]

<Manufacturing of ink composition (Comparative Example 1)>

The ink composition was manufactured according to Example 15 disclosed in JP2012-149228A.
Details thereof are described below.

(Synthesis of amphiphilic urethane acrylate (e))

444.6 parts by mass of isophorone diisocyanate (IPDI) (2 mol) and 400.0 parts by mass of polypropylene glycol

having a weight-average molecular weight of 400 were introduced to a reaction vessel comprising a stirring device, a cooling pipe, a dropping funnel, and an air inlet pipe, 0.34 parts by mass of tin octylate was added while stirring, the temperature in the reaction vessel was increased to 90°C, reaction was performed for 1.5 hours, 1400.0 parts by mass of methoxypolyethylene glycol (PEG) 2000 and 0.90 parts by mass of tin octylate were added, and reaction of 1.5 hours were performed.

Subsequently, 1,300 parts by mass of dipentaerythritol pentaacrylate (SR-399E), 1.77 parts by mass of methoquinone, and 2.13 parts by mass of tin octylate were introduced to this reaction vessel and were mixed, the temperature in the reaction vessel under air bubbling was increased to 85°C, reaction was performed for three hours, and cooling was performed so as to obtain (pentafunctional) amphiphilic urethane acrylate (e).

(Manufacturing of aqueous emulsion photocurable aqueous emulsion (e-3))

21.6 parts by mass of the obtained amphiphilic urethane acrylate (e), 9.2 parts by mass of polypentaerythritol polyacrylate, 6.7 parts by mass of a photoradical polymerization initiator LUCIRIN (Registered trademark) TPO manufactured by BASF SE; 2,4,6-trimethylbenzoyl-diphenyl-phosphine oxide, and 0.06 parts by mass of a white agent (1,4-bis(2-benzoxazolyl) naphthalene; hereinafter referred to as "KCB") were introduced to a reaction vessel comprising a stirring device, a cooling pipe, a dropping funnel, and an air inlet pipe, and the temperature in the vessel was increased to 80°C, and the temperature was maintained for two hours.

Subsequently, the temperature in the vessel was cooled to 50°C, 2.5 parts by mass of a crosslinking agent (PEMP) was added under stirring, and then stirring was continued for 15 minutes. Thereafter, 60 parts by mass of deionized water was added, the temperature was maintained for one hour at 50°C, the temperature in the vessel was increased to 80°C, and the temperature was maintained for 6 hours, so as to obtain 40 mass% of a photocurable aqueous emulsion (e-3) of non-volatile components (the amphiphilic urethane acrylate (e), polypentaerythritol polyacrylate, the photoradical polymerization initiator, a fluorescent brighting agent, and a crosslinking agent).

(Manufacturing of ink composition (Comparative Example 1))

The following components were mixed so as to manufacture an ink composition (Comparative Example 1).

- Components of ink composition (Comparative Example 1)

Self-dispersion-type pigment dispersion liquid ("CAB-O-JET(Registered trademark)-300" manufactured by Cabot Corporation) ... 8.3 parts
Propylene glycol... 8 parts
1,2-Hexanediol... 3 parts
BYK (Registered trademark) 348 ... 1 part
BYK (Registered trademark) 333 ... 0.3 parts
Photocurable aqueous emulsion (e-3) ... 30 parts
Ion exchange water... An amount that causes the sum to 100 parts

Evaluation was performed in the same manner as in Example 1 by using the obtained ink composition (Comparative Example 1).

Results are provided in Table 1.

[Comparative Examples 2 and 3]

The same operation was performed in the same manner as in Example 1 except for changing the ratio [the number of SH groups/C=C number] in Example 1 to ratios as presented in Table 1.

In these examples, the ratio [the number of SH groups/C=C number] was changed not by changing the total amount of the polyfunctional vinyl monomer compound and the polyfunctional thiol compound in Example 1 but by changing the amount ratio of the both.

Results are provided in Table 1.

[Table 1]

| | Particles | | | | | | | | | | Raw material of three-dimensional crosslinked structure | | | | | Evaluation result | | | | | | | | | | |
|---|---|---|---|---|---|---|---|---|---|---|---|---|---|---|---|---|---|---|---|---|---|---|---|---|---|---|
| | C=C | -S- | Gelling | Degree of crosslinking | Particle diameter (μm) | Kind of hydrophilic group | Photopolymerization initiator | | | Sensitizing agent | Polyfunctional vinyl monomer | | Polyfunctional thiol | | Ratio [SH/C=C] | Adhesiveness | | | Flexibility | Pencil hardness | Water resistance | Solvent resistance | Fixing properties | Jettability | Redispersibility | Preservation stability |
| | | | | | | | Kind | Amount (%) | Inclusion | | Kind | Polyfunction number | Kind | Polyfunction number | | PVC | PET | Acryl | | | | | | | | |
| Example 1 | Y | Y | Y | B | 0.20 | -COONa | IRG819 | 5.6 | Y1 | - | SR-399E | 5 | PEMP | 4 | 0.21 | 0 | 1 | 1 | B | 2H | A | A | A | A | A | A |
| Example 2 | Y | Y | Y | A | 0.20 | -COONa | IRG819 | 5.6 | Y1 | - | SR-399E | 5 | PEMP | 4 | 0.40 | 0 | 0 | 0 | A | 2H | A | A | A | A | A | A |
| Example 3 | Y | Y | Y | A | 0.20 | -COONa | IRG819 | 5.6 | Y1 | - | SR-399E | 5 | PEMP | 4 | 0.77 | 0 | 0 | 0 | A | 2H | A | A | A | A | A | A |
| Example 4 | Y | Y | Y | A | 0.20 | -COONa | IRG819 | 5.6 | Y1 | - | SR-399E | 5 | PEMP | 4 | 0.87 | 0 | 1 | 1 | A | H | A | B | B | A | A | A |
| Example 5 | Y | Y | Y | A | 0.20 | -COONa | IRG819 | 5.6 | Y1 | ITX | SR-399E | 5 | PEMP | 4 | 0.40 | 0 | 0 | 0 | A | 2H | A | A | A | A | A | A |
| Example 6 | Y | Y | Y | A | 0.20 | -COONa | IRG184 | 5.6 | Y1 | - | SR-399E | 5 | PEMP | 4 | 0.40 | 0 | 1 | 1 | A | H | A | B | B | A | A | A |
| Example 7 | Y | Y | Y | A | 0.25 | -COONa | IRG819 | 5.6 | Y1 | - | UA-306H | 6 | PEMP | 4 | 0.31 | 0 | 0 | 0 | A | 4H | A | A | A | A | A | A |
| Example 8 | Y | Y | Y | B | 0.20 | -COONa | IRG819 | 5.6 | Y1 | - | SR-399E | 5 | DPMP | 6 | 0.24 | 0 | 1 | 1 | A | 2H | A | A | A | A | A | A |
| Example 9 | Y | Y | Y | B | 0.18 | -COONa | IRG819 | 5.6 | Y1 | - | SR-399E | 5 | TMMP | 3 | 0.23 | 0 | 1 | 1 | B | 2H | A | A | A | A | A | A |
| Example 10 | Y | Y | Y | B | 0.18 | -COONa | IRG819 | 5.6 | Y1 | - | SR-399E | 5 | TEMPIC | 3 | 0.26 | 0 | 1 | 1 | B | H | A | A | A | A | A | A |
| Example 11 | Y | Y | Y | A | 0.15 | EO | IRG819 | 5.6 | Y1 | - | A-DPH | 6 | TMMP | 3 | 0.39 | 0 | 0 | 0 | A | H | A | A | A | A | A | A |
| Example 12 | Y | Y | Y | B | 0.15 | EO | IRG819 | 5.6 | Y1 | - | A-TMPT | 3 | TEMPIC | 3 | 0.78 | 0 | 0 | 0 | A | H | A | A | B | A | A | A |
| Example 13 | Y | Y | Y | B | 0.15 | EO | IRG819 | 5.6 | Y1 | - | A-TMPT | 3 | DPMP | 6 | 0.45 | 0 | 1 | 1 | A | H | A | A | A | A | A | A |
| Example 14 | Y | Y | Y | B | 0.15 | EO | IRG819 | 5.6 | Y1 | - | TMPT | 3 | DPMP | 6 | 0.45 | 0 | 1 | 1 | B | 2H | A | A | B | A | A | A |
| Example 15 | Y | Y | Y | B | 0.15 | EO | IRG819 | 5.6 | Y1 | | TMPTV | 3 | DPMP | 6 | 0.45 | 0 | 1 | 1 | B | F | B | B | B | A | A | A |
| Example 16 | Y | Y | Y | A | 0.15 | EO | IRG819 | 5.6 | Y1 | - | A-TMMT | 4 | DPMP | 6 | 0.32 | 0 | 0 | 0 | A | H | A | A | B | A | A | A |
| Example 17 | Y | Y | Y | A | 0.12 | EO | IRG819 | 5.6 | Y1 | - | SR-399E | 5 | DPMP | 6 | 0.44 | 0 | 0 | 0 | A | 2H | A | A | A | A | A | A |
| Example 18 | Y | Y | Y | A | 0.12 | EO | IRG819 | 5.6 | Y1 | - | A-DPH | 6 | DPMP | 6 | 0.47 | 0 | 0 | 0 | A | 2H | A | A | A | A | A | A |
| Example 19 | Y | Y | Y | A | 0.15 | EO | IRG819 | 5.6 | Y1 | - | #802 | 8 | DPMP | 6 | 0.45 | 0 | 0 | 0 | A | 2H | A | A | A | A | A | A |
| Example 20 | Y | Y | Y | A | 0.17 | EO | IRG819 | 5.6 | Y1 | - | UA-306H | 6 | DPMP | 6 | 0.47 | 0 | 0 | 0 | A | 4H | A | A | A | A | A | A |
| Example 21 | Y | Y | Y | A | 0.17 | EO | IRG819 | 5.6 | Y1 | - | UA-306I | 6 | DPMP | 6 | 0.51 | 0 | 0 | 0 | A | 4H | A | A | A | A | A | A |
| Example 22 | Y | Y | Y | A | 0.22 | $-SO_3Na$ | IRG819 | 5.6 | Y1 | - | SR-399E | 5 | PEMP | 4 | 0.40 | 0 | 0 | 0 | A | 2H | A | A | A | A | B | A |
| Example 23 | Y | Y | Y | A | 0.22 | $-SO_3Na$ | IRG819 | 5.6 | Y1 | - | SR-399E | 5 | PEMP | 4 | 0.60 | 0 | 0 | 0 | A | 2H | A | A | A | A | B | A |
| Example 24 | Y | Y | Y | A | 0.20 | -COONa | IRG819 | 0.5 | Y1 | - | SR-399E | 5 | PEMP | 4 | 0.40 | 0 | 0 | 0 | A | H | A | B | B | A | A | A |
| Example 25 | Y | Y | Y | A | 0.20 | -COONa | IRG819 | 12 | Y1 | - | SR-399E | 5 | PEMP | 4 | 0.40 | 0 | 0 | 1 | A | 2H | A | A | A | A | A | B |
| Example 26 | Y | Y | Y | A | 0.60 | -COONa | IRG819 | 5.6 | Y1 | - | SR-399E | 5 | PEMP | 4 | 0.40 | 0 | 1 | 1 | A | 2H | A | A | A | B | B | B |
| Comparative Example 1 | Y | Y | N | D | 0.30 | EO | TPO | 3.7 | Y2 | - | (e) | 5 | PEMP | 4 | 0.09 | 4 | 2 | 5 | D | H | A | A | B | B | C | C |
| Comparative Example 2 | Y | Y | N | D | 0.20 | -COONa | IRG819 | 5.6 | Y1 | - | SR-399E | 5 | PEMP | 4 | 0.10 | 2 | 3 | 4 | D | H | A | A | A | B | C | C |
| Comparative Example 3 | N | Y | Y | B | 0.20 | -COONa | IRG819 | 5.6 | Y1 | - | SR-399E | 5 | PEMP | 4 | 1.25 | 4 | 5 | 5 | E | 5B | D | D | D | C | B | D |

-Descriptions of Table 1-

- The "C=C" section indicates existence of an ethylenic double bond (C=C) in the three-dimensional crosslinked structure. Here, in a case where the ratio [the number of SH groups/C=C number] was less than 1.00, that is, a case where C=C remained after the reaction is indicated as "Y", and a case where C=C did not remain after the reaction is indicated as "N". The existence of an ethylenic double bond (C=C) was checked by fourier transform infrared spectroscopy (FT-IR).
- "-S-" indicates existence of a thioether bond (-S-) in the three-dimensional crosslinked structure. Here, in a case where the polyfunctional vinyl monomer and the polyfunctional thiol were used as the raw material of the three-dimensional crosslinked structure, that is, a case where -S- was formed by reaction of the both is indicated as "Y".
- The "ratio [SH/C=C]" means the ratio [the number of SH groups/C=C number].
- The "EO" in the "kind of hydrophilic group" means an ethyleneoxy group ($-CH_2CH_2O-$ group).
- Sodium salt (-OS03Na group) of a sulfuric acid group derived from sodium dodecyl sulfate is included in the particles in each example in addition to the hydrophilic group presented in Table 1.
- The amount (%) of the photopolymerization initiator indicates a content (mass%) of the photopolymerization initiator with respect to a total solid content (that is, a total amount of particles) of the water dispersion before an ink composition is formed.

The photopolymerization initiators in Table 1 are the following photopolymerization initiators.

IRG819 ... IRGACURE (Registered trademark) 819 (bis(2,4,6-trimethylbenzoyl)-phenylphosphine oxide; manufactured by BASF SE)

IRG184 ... IRGACURE (Registered trademark) 184 (1-hydroxy-cyclohexyl-phenyl-ketone; manufactured by BASF SE)

TPO ... LUCIRIN (Registered trademark) TPO (2,4,6-trimethylbenzoyl-diphenyl-phosphine oxide; manufactured by BASF SE)

Polyfunctional thiol in Table 1 each is the following compounds.

Hereinafter, "MW" is a weight-average molecular weight.

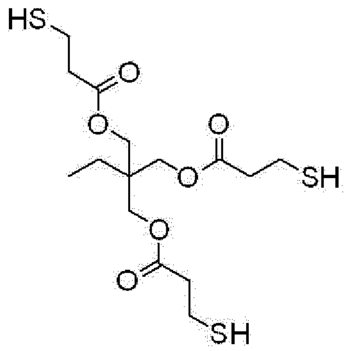

TMMP
(MW: 398.56)

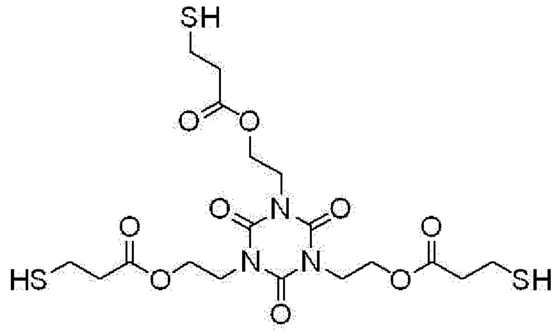

TEMPIC
(MW: 567.70)

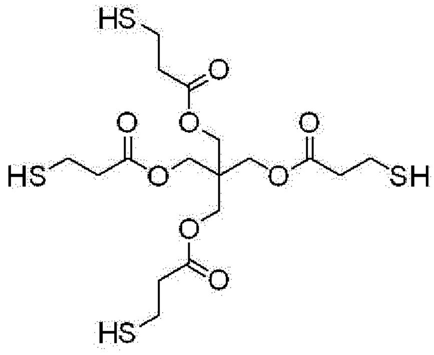

PEMP
(MW: 488.66)

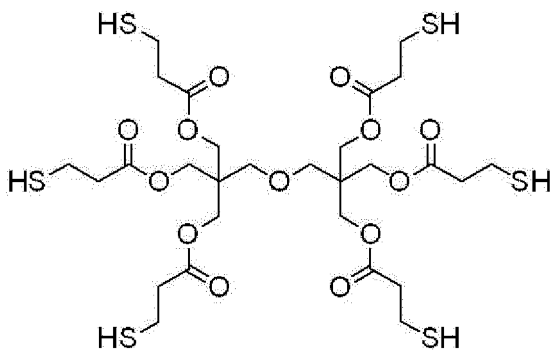

DPMP
(MW: 783.05)

Polyfunctional vinyl monomers in Table 1 each are the following compounds.

"#802" is VISCOAT (Registered trademark)#802 manufactured by Osaka Organic Chemical Industry Ltd.

"(e)" in Comparative Example 1 is the above (pentafunctional) amphiphilic urethane acrylate (e).

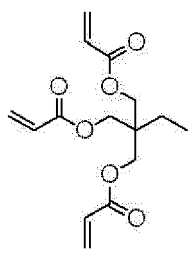

A-TMPT
(MW: 296.32)

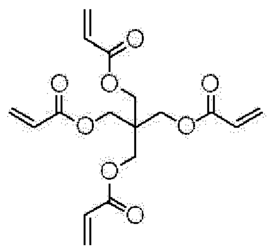

A-TMMT
(MW: 352.34)

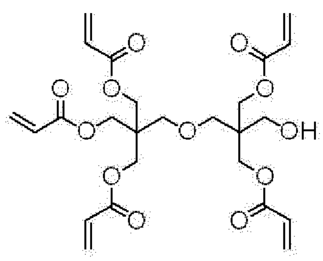

SR-399E
(MW: 524.51)

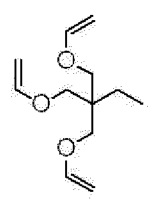

TMPTV
(MW: 212.29)

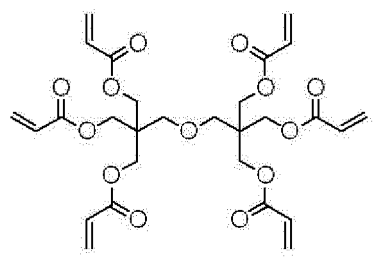

A-DPH
(MW: 578.56)

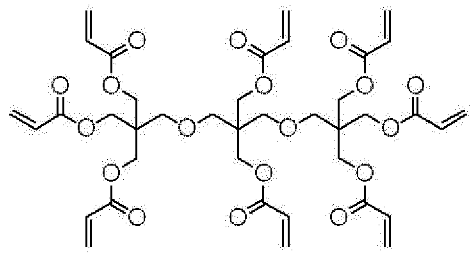

#802
(MW: 804.79)

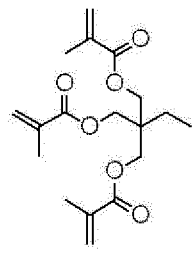

TMPT
(MW: 338.40)

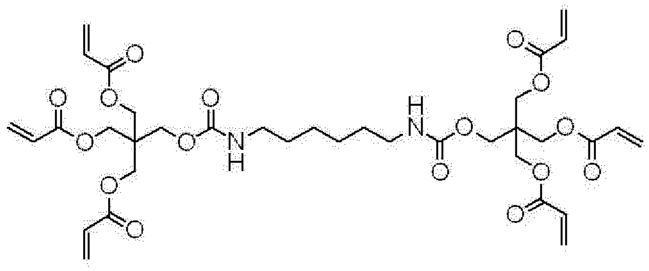

UA-306H
(MW: 764.77)

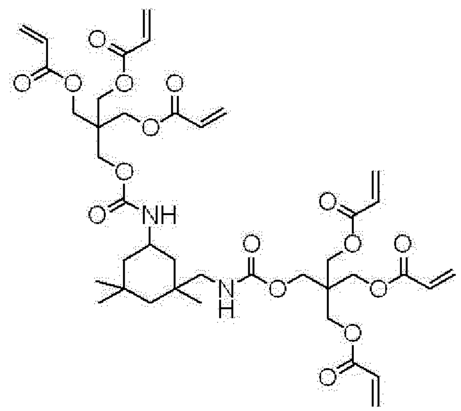

UA-306I
(MW: 818.86)

As presented in Table 1, with the ink compositions (water dispersion of gel particles) of Examples 1 to 26 in which gel particles having a three-dimensional crosslinked structure including a thioether bond (-S-) and an ethylenic double bond (C=C), having a hydrophilic group, and including a photopolymerization initiator were dispersed in water, it was possible to form a cured film in which redispersibility was excellent and pencil hardness and flexibility were compatible with each other. In Examples 1 to 26, it was possible to obtain results that were excellent in adhesiveness, water resistance, solvent resistance, fixing properties, jettability, and preservation stability.

With respect to this, the ink compositions of Comparative Examples 1 and 2 that did not include gel particles were deteriorated in view of redispersibility, flexibility of a cured film, and the like. The cured films of the ink compositions of Comparative Examples 1 and 2 were deteriorated in adhesiveness. With respect to the adhesiveness, it was considered that since ethylenic double bonds (C=C) were excessive to thioether bonds (-S-), cure shrinkage of the film at the time of photocuring was promoted, and adhesiveness between the film and the base material was decreased by this cure shrinkage.

The ink composition of Comparative Example 3 which was a water dispersion of gel particles but in which an ethylenic double bond (C=C) was not included in the three-dimensional crosslinked structure of the gel particles was deteriorated in view of adhesiveness, pencil hardness, fixing properties, and the like.

[Evaluation by using LED]

The ink compositions manufactured in Examples 1 to 6, 17, and 18 were evaluated by using an LED.

Specifically, with respect to the evaluation of adhesiveness, flexibility, pencil hardness, water resistance, solvent resistance, and fixing properties in each example, the same operations were performed except for changing the UV light source to a 385 nm UV-LED irradiator (manufactured by CCS Inc.) for a test and changing the exposure energies to 300 $mJ/cm^2$.

Results there are provided in Table 2.

[Table 2]

| | Particles | | | | | | | | | | Raw material of three-dimensional crosslinked structure | | | | | Evaluation result (LED light: 385 nm) | | | | | | | |
|---|---|---|---|---|---|---|---|---|---|---|---|---|---|---|---|---|---|---|---|---|---|---|---|
| | C=C | -S- | Gelling | Degree of crosslinking | Particle diameter (μm) | Kind of hydrophilic group | Photopolymerization initiator | | | Sensitizing agent | Polyfunctional vinyl monomer | | Polyfunctional thiol | | Ratio [SH/C=C] | Adhesiveness | | | Flexibility | Pencil hardness | Water resistance | Solvent resistance | Fixing properties |
| | | | | | | | Kind | Amount (%) | Inclusion | | Kind | Polyfunction number | Kind | Polyfunction number | | PVC | PET | Acryl | | | | | |
| Example 1 | Y | Y | Y | B | 0.20 | -COONa | IRG819 | 5.6 | Y1 | - | SR-399E | 5 | PEMP | 4 | 0.21 | 0 | 1 | 1 | B | H | A | A | B |
| Example 2 | Y | Y | Y | A | 0.20 | -COONa | IRG819 | 5.6 | Y1 | - | SR-399E | 5 | PEMP | 4 | 0.40 | 0 | 0 | 0 | A | H | A | A | B |
| Example 3 | Y | Y | Y | A | 0.20 | -COONa | IRG819 | 5.6 | Y1 | - | SR-399E | 5 | PEMP | 4 | 0.77 | 0 | 0 | 0 | A | H | A | A | B |
| Example 4 | Y | Y | Y | A | 0.20 | -COONa | IRG819 | 5.6 | Y1 | - | SR-399E | 5 | PEMP | 4 | 0.87 | 0 | 1 | 1 | B | F | A | B | B |
| Example 5 | Y | Y | Y | A | 0.20 | -COONa | IRG819 | 5.6 | Y1 | ITX | SR-399E | 5 | PEMP | 4 | 0.40 | 0 | 0 | 0 | A | 2H | A | A | A |
| Example 6 | Y | Y | Y | A | 0.20 | -COONa | IRG184 | 5.6 | Y1 | - | SR-399E | 5 | PEMP | 4 | 0.40 | 5 | 5 | 5 | A | 3B | A | B | D |
| Example 17 | Y | Y | Y | A | 0.12 | EO | IRG819 | 5.6 | Y1 | - | SR-399E | 5 | DPMP | 6 | 0.44 | 0 | 0 | 0 | A | H | A | A | B |
| Example 18 | Y | Y | Y | A | 0.12 | EO | IRG819 | 5.6 | Y1 | - | A-DPH | 6 | DPMP | 6 | 0.47 | 0 | 0 | 0 | A | H | A | A | B |

As presented in Table 2, in Examples 1 to 5, 17, and 18 in which IRG819 which was a bisacylphosphine oxide compound was used as photopolymerization initiator, prominently excellent results were able to be obtained with respect to the evaluation in which LED light was used (particularly, adhesiveness, pencil hardness, and fixing properties) compared with Example 6 in which IRG184 (1-hydroxy-cyclohexyl-phenyl-ketone) was used as a photopolymerization initiator.

## Claims

1. A water dispersion of gel particles,

    wherein the gel particles which have a three-dimensional crosslinked structure including a thioether bond and an ethylenic double bond, have a hydrophilic group and include a photopolymerization initiator are dispersed in water,
    wherein the three-dimensional crosslinked structure includes a structure obtained by reacting a polyfunctional vinyl monomer compound and a polyfunctional thiol compound, wherein if the number of ethylenic double bonds included in a total amount of the polyfunctional vinyl monomer compound is set as a C=C number and the number of thiol groups included in a total amount of the polyfunctional thiol compound is set as the number of SH groups, a ratio of the number of SH groups to the C=C number is 0.20 or greater and less than 1.00, and
    wherein whether the particles in the water dispersion are gel particles is checked by the method indicated in the section "Determination of gelling" of the description.

2. The water dispersion of gel particles according to claim 1,
    wherein the three-dimensional crosslinked structure includes a (meth)acryloyl group as a group including the ethylenic double bond.

3. The water dispersion of gel particles according to claim 1 or 2,
    wherein the three-dimensional crosslinked structure further includes a urethane bond.

4. The water dispersion of gel particles according to any one of claims 1 to 3,
    wherein the hydrophilic group is at least one group selected from the group consisting of a carboxyl group, a salt of a carboxyl group, a sulfo group, a salt of a sulfo group, a sulfuric acid group, a salt of a sulfuric acid group, a phosphonic acid group, a salt of a phosphonic acid group, a phosphoric acid group, a salt of a phosphoric acid group, an ammonium base, and an alkyleneoxy group.

5. The water dispersion of gel particles according to any one of claims 1 to 4,
    wherein solubility of the photopolymerization initiator in water is 1.0 mass% or less at 25°C.

6. The water dispersion of gel particles according to any one of claims 1 to 5,
    wherein the photopolymerization initiator is an acylphosphine oxide compound.

7. The water dispersion of gel particles according to any one of claims 1 to 6,
    wherein an amount of the photopolymerization initiator is 0.5 mass% to 12 mass% with respect to a total solid content of the gel particles.

**8.** The water dispersion of gel particles according to any one of claims 1 to 7, wherein a volume-average particle diameter of the gel particles is 0.05 μm to 0.60 μm as measured by light scattering.

**9.** The water dispersion of gel particles according to any one of claims 1 to 8, which is used for inkjet recording.

**10.** The water dispersion of gel particles according to any one of claims 1 to 9, wherein a total solid content of the gel particles is 50 mass% or greater with respect to a total solid content of the water dispersion.

**11.** The water dispersion of gel particles according to claim 1, wherein the polyfunctional vinyl monomer compound is a trifunctional or greater (meth)acrylate compound, and the polyfunctional thiol compound is a trifunctional or greater thiol compound.

**12.** The water dispersion of gel particles according to claim 1 or 11, wherein the polyfunctional vinyl monomer compound is a polyfunctional urethane acrylate compound.

**13.** A method of producing the water dispersion of gel particles according to any one of claims 1 to 12, comprising:

an emulsification step in which an oil phase component which includes the polyfunctional vinyl monomer compound, the polyfunctional thiol compound, the photopolymerization initiator, and an organic solvent, in which the number of ethylenic double bonds included in a total amount of the polyfunctional vinyl monomer compound is a C=C number, and in which, when the number of thiol groups included in a total amount of the polyfunctional thiol compound is the number of SH groups, and a ratio of the number of SH groups to the C=C number is 0.20 or greater and less than 1.00 and a water phase component which includes water are mixed and emulsified so as to obtain an emulsion and in which at least one of the oil phase component and the water phase component includes an organic compound having the hydrophilic group; and
a gelation step of causing the polyfunctional vinyl monomer compound and the polyfunctional thiol compound to react with each other by heating the emulsion, so as to obtain the water dispersion of gel particles,
wherein whether the particles in the water dispersion are gel particles is checked by the method indicated in the section "Determination of gelling" of the description.

**14.** An image forming method comprising:

an application step of applying the water dispersion of gel particles according to any one of claims 1 to 12 to a recording medium; and
an irradiation step of irradiating the water dispersion of gel particles applied to the recording medium with active energy rays.

## Patentansprüche

**1.** Wasserdispersion von Gelpartikeln,

worin die Gelpartikel, die eine eine Thioetherbindung und eine ethylenische Doppelbindung umfassende dreidimensional vernetzte Struktur aufweisen, eine hydrophile Gruppe aufweisen und einen Fotopolymerisationsinitiator umfassen, in Wasser dispergiert sind,
worin die dreidimensional vernetzte Struktur eine Struktur umfasst, die erhalten wird durch Umsetzen einer polyfunktionellen Vinylmonomerverbindung und einer polyfunktionellen Thiolverbindung, worin, wenn die Anzahl der ethylenischen Doppelbindungen, die in der Gesamtmenge der polyfunktionellen Vinylmonomerverbindung enthalten sind, als C=C-Zahl definiert wird, und die Anzahl der Thiolgruppen, die in einer Gesamtmenge der polyfunktionellen Thiolverbindung enthalten sind, als die Anzahl der SH-Gruppen definiert ist, das Verhältnis der Anzahl der SH-Gruppen zur C=C-Zahl 0,020 oder größer und keiner als 1,00 ist, und
worin ob die Partikel in der Wasserdispersion Gelpartikel sind überprüft wird durch das im Abschnitt "Determination of gelling" der Beschreibung angezeigte Verfahren.

**2.** Wasserdispersion von Gelpartikeln gemäß Anspruch 1, worin die dreidimensional vernetzte Struktur eine (Meth)acryloylgruppe als eine Gruppe umfasst, die die ethylenische Doppelbindung umfasst.

**3.** Wasserdispersion von Gelpartikeln gemäß Anspruch 1 oder 2, worin die dreidimensional vernetzte Struktur ferner eine Urethanbindung umfasst.

**4.** Wasserdispersion von Gelpartikeln gemäß irgendeinem der Ansprüche 1 bis 3, worin die hydrophile Gruppe mindestens eine Gruppe ist, die ausgewählt ist aus der Gruppe bestehend aus Carboxylgruppe, einem Salz einer Carboxylgruppe, einer Sulfogruppe, einem Salz einer Sulfogruppe, einer Schwefelsäuregruppe, einem Salz einer Schwefelsäuregruppe, einer Phosphonsäuregruppe, einem Salz einer Phosphonsäuregruppe, einer Phosphorsäuregruppe, einem Salz einer Phosphorsäuregruppe, einer Ammonium-Base und einer Alkylenoxygruppe.

**5.** Wasserdispersion von Gelpartikeln gemäß irgendeinem der Ansprüche 1 bis 4, worin die Löslichkeit des Fotopolymerisationsinitiators in Waser 1,0 Masse-% oder weniger bei 25°C beträgt.

**6.** Wasserdispersion von Gelpartikeln gemäß irgendeinem der Ansprüche 1 bis 5, worin der Fotopolymerisationsinitiator eine Acylphosphinoxidverbindung ist.

**7.** Wasserdispersion von Gelpartikeln gemäß irgendeinem der Ansprüche 1 bis 6, worin die Menge des Fotopolymerisationsinitiators 0,5 Masse-% bis 12 Masse-% beträgt, bezogen auf den Gesamtfeststoffgehalt der Gelpartikel.

**8.** Wasserdispersion von Gelpartikeln gemäß irgendeinem der Ansprüche 1 bis 7, worin der wie durch Lichtstreuung bestimmte volumengemittelte Partikeldurchmesser der Gelpartikel 0,05 $\mu$m bis 0,60 $\mu$m beträgt.

**9.** Wasserdispersion von Gelpartikeln gemäß irgendeinem der Ansprüche 1 bis 8, die für die Tintenstrahlaufzeichnung eingesetzt wird.

**10.** Wasserdispersion von Gelpartikeln gemäß irgendeinem der Ansprüche 1 bis 9, worin der Gesamtfeststoffgehalt der Gelpartikel 50 Masse-% oder größer beträgt, bezogen auf den Gesamtfeststoffgehalt der Wasserdispersion.

**11.** Wasserdispersion von Gelpartikeln gemäß Anspruch 1, worin die polyfunktionelle Vinylmonomerverbindung eine tri- oder höherfunktionelle (Meth)acrylatverbindung ist und die polyfunktionelle Thiolverbindung eine tri- oder höherfunktionelle Thiolverbindung ist.

**12.** Wasserdispersion von Gelpartikeln gemäß Anspruch 1 oder 11, worin die polyfunktionelle Vinylmonomerverbindung eine polyfunktionelle Urethanacrylatverbindung ist.

**13.** Verfahren zur Herstellung der Wasserdispersion von Gelpartikeln gemäß irgendeinem der Ansprüche 1 bis 12, umfassend:

einen Emulgierschritt, worin eine Ölphasenkomponente, die die polyfunktionelle Vinylmonomerverbindung, die polyfunktionelle Thiolverbindung, den Fotopolymerisationsinitiator und ein organisches Lösungsmittel, worin die Anzahl der ethylenischen Doppelbindungen, die in der Gesamtmenge der polyfunktionellen Vinylmonomerverbindung enthalten sind, die C=C-Zahl ist, und worin, wenn die Anzahl der in einer Gesamtmenge der polyfunktionellen Thiolverbindung enthaltenen Thiolgruppen die Anzahl der SH-Gruppen ist, und worin ein Verhältnis der Anzahl der SH-Gruppen zu der C=C-Zahl 0,20 oder größer und kleiner als 1,00 ist, umfasst, und eine Wasserphasenkomponente, die Wasser umfasst, so gemischt und emulgiert werden, dass eine Emulsion erhalten wird, worin zumindest eine von der Ölphasenkomponente und der Wasserphasenkomponente eine organische Verbindung umfasst, die die hydrophile Gruppe aufweist; und
eine Gelierschritt, in dem verursacht wird, dass die polyfunktionelle Vinylmonomerverbindung und die polyfunktionelle Thiolverbindung miteinander reagieren, indem die Emulsion erwärmt wird, so dass die Wasserdispersion von Gelpartikeln erhalten wird,
worin ob die Partikel der Wasserdispersion Gelpartikel sind, überprüft wird durch das im Abschnitt "Determination of gelling" in der Beschreibung angezeigte Verfahren.

**14.** Bildgebendes Verfahren, umfassend:

einen Auftragungsschritt zum Auftragen der Wasserdispersion von Gelpartikeln gemäß irgendeinem der Ansprüche 1 bis 12 auf ein Aufzeichnungsmedium; und
einen Bestrahlungsschritt zum Bestrahlen der auf das Aufzeichnungsmedium aufgetragenen Wasserdispersion von Gelpartikeln mit aktiven Energiestrahlen.

## Revendications

1. Dispersion aqueuse de particules de gel,

    dans laquelle les particules de gel qui présentent une structure réticulée tridimensionnelle incluant une liaison thioéther et une double liaison éthylénique, présentent un groupe hydrophile et incluent un initiateur de photopolymérisation sont dispersées dans de l'eau,
    dans laquelle la structure réticulée tridimensionnelle inclut une structure obtenue par la réaction d'un composé monomère vinylique polyfonctionnel et d'un composé de thiol polyfonctionnel, dans laquelle si le nombre de doubles liaisons éthyléniques incluses dans une quantité totale du composé monomère vinylique polyfonctionnel est défini comme étant un nombre de C=C et le nombre de groupes thiol inclus dans une quantité totale du composé de thiol polyfonctionnel est défini comme étant le nombre de groupes SH, un rapport du nombre de groupes SH sur le nombre de C=C est de 0,20 ou plus et inférieur à 1,00, et
    dans laquelle il est vérifié que les particules dans la dispersion aqueuse sont des particules de gel par le procédé indiqué dans la section « Détermination de la gélification » de la description.

2. Dispersion aqueuse de particules de gel selon la revendication 1,
dans laquelle la structure réticulée tridimensionnelle inclut un groupe (méth)acryloyle en tant que groupe incluant la double liaison éthylénique.

3. Dispersion aqueuse de particules de gel selon la revendication 1 ou 2,
dans laquelle la structure réticulée tridimensionnelle inclut en outre une liaison uréthane.

4. Dispersion aqueuse de particules de gel selon l'une quelconque des revendications 1 à 3,
dans laquelle le groupe hydrophile est au moins un groupe sélectionné dans le groupe consistant en un groupe carboxyle, un sel d'un groupe carboxyle, un groupe sulfo, un sel d'un groupe sulfo, un groupe acide sulfurique, un sel d'un groupe acide sulfurique, un groupe acide phosphonique, un sel d'un groupe acide phosphonique, un groupe acide phosphorique, un sel d'un groupe acide phosphorique, une base à ammonium et un groupe alkylèneoxy.

5. Dispersion aqueuse de particules de gel selon l'une quelconque des revendications 1 à 4,
dans laquelle la solubilité de l'initiateur de photopolymérisation dans l'eau est de 1,0 % en masse ou moins à 25 °C.

6. Dispersion aqueuse de particules de gel selon l'une quelconque des revendications 1 à 5,
dans laquelle l'initiateur de photopolymérisation est un composé d'oxyde d'acylphosphine.

7. Dispersion aqueuse de particules de gel selon l'une quelconque des revendications 1 à 6,
dans laquelle une quantité d'initiateur de photopolymérisation est de 0,5 % en masse à 12 % en masse par rapport à une teneur totale en solides des particules de gel.

8. Dispersion aqueuse de particules de gel selon l'une quelconque des revendications 1 à 7,
dans laquelle un diamètre de particule moyen en volume des particules de gel est de 0,05 $\mu$m à 0,60 $\mu$m tel que mesuré par diffusion de la lumière.

9. Dispersion aqueuse de particules de gel selon l'une quelconque des revendications 1 à 8, qui est utilisée pour un enregistrement par jet d'encre.

10. Dispersion aqueuse de particules de gel selon l'une quelconque des revendications 1 à 9,
dans laquelle une teneur totale en solides des particules de gel est de 50 % en masse ou plus par rapport à une teneur totale en solides de la dispersion aqueuse.

11. Dispersion aqueuse de particules de gel selon la revendication 1,
dans laquelle le composé monomère vinylique polyfonctionnel est un composé de (méth)acrylate trifonctionnel ou plus, et le composé de thiol polyfonctionnel est un composé de thiol trifonctionnel ou plus.

12. Dispersion aqueuse de particules de gel selon la revendication 1 ou 11,
dans laquelle le composé monomère vinylique polyfonctionnel est un composé d'acrylate d'uréthane polyfonctionnel.

13. Procédé de production de la dispersion aqueuse de particules de gel selon l'une quelconque des revendications 1

à 12, comprenant :

une étape d'émulsification dans laquelle un composant de phase huileuse qui inclut le composé monomère vinylique polyfonctionnel, le composé de thiol polyfonctionnel, l'initiateur de photopolymérisation, et un solvant organique, dans laquelle le nombre de doubles liaisons éthyléniques incluses dans une quantité totale du composé monomère vinylique polyfonctionnel est un nombre de C=C, et dans laquelle, quand le nombre de groupes thiol inclus dans une quantité totale du composé de thiol polyfonctionnel est le nombre de groupes SH, et un rapport du nombre de groupes SH sur le nombre de C=C est de 0,20 ou plus et inférieur à 1,00, et un composant de phase aqueuse qui inclut de l'eau sont mélangés et émulsifiés de manière à obtenir une émulsion et dans laquelle au moins l'un parmi le composant de phase huileuse et le composant de phase aqueuse inclut un composé organique présentant le groupe hydrophile ; et
une étape de gélification consistant à faire réagir le composé monomère vinylique polyfonctionnel et le composé de thiol polyfonctionnel l'un avec l'autre en chauffant l'émulsion, de manière à obtenir la dispersion aqueuse de particules de gel,
dans lequel il est vérifié que les particules dans la dispersion aqueuse sont des particules de gel par le procédé indiqué dans la section « Détermination de la gélification » de la description.

**14.** Procédé de formation d'image comprenant :

une étape d'application consistant à appliquer la dispersion aqueuse de particules de gel selon l'une quelconque des revendications 1 à 12 sur un support d'enregistrement ; et
une étape d'irradiation consistant à irradier la dispersion aqueuse de particules de gel appliquées sur le support d'enregistrement avec des rayons d'énergie active.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012149228 A
- WO 2008047620 A
- US 20120225968 A1
- JP 47006416 A
- JP S476416 A
- JP 47003981 A
- JP S473981 A
- JP 47022326 A
- JP S4722326 A
- JP 47023664 A
- JP S4723664 A
- JP 57030704 A
- JP S5730704 A
- JP 60026483 A
- JP S6026483 A
- JP 60026403 A
- JP S6026403 A
- JP 62081345 A
- JP 1034242 A
- JP H0134242 A
- US 4318791 A
- EP 0284561 A1
- JP 2211452 A
- JP H02211452 A
- JP 61194062 A
- JP S61194062 A
- JP 2009597 A
- JP H029597 A
- JP 2009596 A
- JP H029596 A
- JP 63061950 A
- JP S6361950 A
- JP 59042864 A
- JP S5942864 A
- JP 2008105379 A
- JP 2009114290 A
- JP 2014040529 A
- JP 2010024276 A
- JP 6107718 A
- JP H06107718 A
- JP 62173463 A
- JP S62173463 A
- JP 62183457 A
- JP S62183457 A
- JP 57009053 B
- JP S579053 B
- JP 62135826 A
- JP S62135826 A
- JP 60132767 A
- JP S60132767 A


### Non-patent literature cited in the description


- **J. P. FOUASSIER ; J. F. RABEK.** *RADIATION CURING IN POLYMER SCIENCE AND TECHNOLOGY,* 1993, 77-117